(19) **Europäisches Patentamt**

**European Patent Office**

**Office européen des brevets**

(11) **EP 0 999 675 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
***H04L 25/08*** *(2006.01)*

(21) Anmeldenummer: **99121682.1**

(22) Anmeldetag: **02.11.1999**

(54) **Leitungsfehlerprüfungsschaltung für ein elektrisches Datenübertragungssystem**

Line fault detecting circuit for electrical data transmission system

Circuit détecteur de défauts de lignes pour système de transmission de données électriques

(84) Benannte Vertragsstaaten:
**FR GB IT**

(30) Priorität: **03.11.1998 DE 19850672**

(43) Veröffentlichungstag der Anmeldung:
**10.05.2000 Patentblatt 2000/19**

(73) Patentinhaber: **STMicroelectronics GmbH**
**85630 Grasbrunn (DE)**

(72) Erfinder: **Heinrich, Peter**
**83533 Edling (DE)**

(74) Vertreter: **Hirsch, Peter et al**
**Klunker Schmitt-Nilson Hirsch**
**Winzererstrasse 106**
**80797 München (DE)**

(56) Entgegenhaltungen:
**EP-A- 0 529 602**

- **KOLARIK V ET AL: "Designing self-exercising analogue checkers" VLSI TEST SYMPOSIUM, 1994. PROCEEDINGS., 12TH IEEE CHERRY HILL, NJ, USA 25-28 APRIL 1994, LOS ALAMITOS, CA, USA,IEEE COMPUT. SOC, 25. April 1994 (1994-04-25), Seiten 252-257, XP010098028 ISBN: 0-8186-5440-6**

**Beschreibung**

Die Erfindung betrifft eine Leitungsfehlerprüfschaltung für ein elektrisches Datenübertragungssystem mit einer ersten Leitung und einer zweiten Leitung zur differenzmäßigen Übertragung von binären Datenimpulsen in der Form, daß einem ersten Logikwert der Datenimpulse ein hohes Potential auf der ersten Leitung und ein niedriges Potential auf der zweiten Leitung und einem zweiten Logikwert der Datenimpulse ein niedriges Potential auf der ersten Leitung und ein hohes Potential auf der zweiten Leitung zugeordnet sind.

Ein derartiges Datenübertragungssystem umfaßt üblicherweise eine größere Anzahl von Datenstellen, die mittels der beiden Leitungen miteinander verbunden sind und von denen mindestens ein Teil sowohl als Sender als auch als Empfänger arbeiten kann.

Ein erster Vorteil einer derartigen differenzmäßigen Übertragung über zwei Leitungen besteht darin, daß Störimpulse, die in gleicher Form auf beide Leitungen gelangen, bei der differenzmäßigen Bewertung oder Decodierung der über die Leitungen übertragenen Datenimpulse eliminiert werden. Ein zweiter Vorteil liegt darin, daß ein derartiges differenzmäßig arbeitendes Datenübertragungssystem Redundanz gegenüber einer Reihe von Leitungsfehlern aufweist, eine fehlerfreie Datenübertragung daher auch noch möglich ist, wenn die beiden Leitungen miteinander kurzgeschlossen sind, wenn eine der beiden Leitungen offen ist oder wenn eine der beiden Leitungen mit einem Massepotential oder einem Versorgungspotential kurzgeschlossen ist.

Nähere Erläuterungen hierzu findet man in der DE 195 23 031A1.

Bei einem derartigen differenzmäßig arbeitenden Datenübertragungssystem kann es sich um ein CAN-System handeln. Der Begriff CAN steht für Controller Area Network. Nähere Angaben hierzu finden sich in dem Buch "Controller Area Network CAN" von Konrad Etschberger, Carl Hanser Verlag 1994, ISBN-Nr. 3-446-17596-2.

Einsatz finden derartige CAN-Systeme beispielsweise im Kraftfahrzeugbereich.

In EP 0 529 602 A2 ist ein Multiplex-Übertragungsgerät beschrieben, das über mindestens zwei Übertragungsleitungen mit anderen Multiplex-Übertragungsgeräten verbunden ist. Es sind Umwandlungsschaltungen zum Umwandeln der Signale auf den Übertragungsleitungen in entsprechende Spannungen vorgesehen, sowie eine erste Vergleicherschaltung zum Miteinander-Vergleichen von umgewandelten Spannungen a und b der Übertragungsleitungen. Eine zweite Vergleicherschaltung dient zum Vergleichen der umgewandelten Spannung a einer Übertragungsleitung mit einer vorbestimmten Bezugsspannung Vc. Eine dritte Vergleicherschaltung dient zum Vergleichen der umgewandelten Spannung b der anderen Übertragungsleitung mit einer vorbestimmten Bezugsspannung Vb. Über die Ausgabepegel der verschiedenen Vergleicherschaltungen sind auf den Übertragungsleitungen auftretende Fehler feststellbar, wobei die Vergleicherschaltungen die Vergleichsergebnisse an entsprechende Differenzialschaltungen bereitstellen.

Aus der genannten DE 195 23 031A1 ist es bekannt, in Empfangsstellen eines solchen differenzmäßig arbeitenden Datenübertragungssystems zur Decodierung der übertragenen Datenimpulse drei Komparatoren zu verwenden, von denen ein erster die Potentiale auf den beiden Leitungen miteinander vergleicht, ein zweiter das Potential der ersten Leitung mit einem zwischen dem niedrigen Potential und dem hohen Potential des Datenübertragungssystems befindlichen Mittenpotential vergleicht und ein dritter das Potential der zweiten Leitung mit dem Mittenpotenital vergleicht. Dabei werden die Ausgangssignale der drei Komparatoren einer Fehlererkennungsschaltung zugeführt, die anhand des Musters der von den Ausgängen der drei Komparatoren gelieferten Signale die Erkennung verschiedener Leitungsfehler zuläßt. Solange kein Leitungsfehler festgestellt wird, wird für die Decodierung das Ausgangssignal des ersten Decodierers herangezogen. Wird ein Leitungsfehler festgestellt, wird zur Decodierung das Ausgangssignal entweder des zweiten oder des dritten Komparators herangezogen.

Führt man die Fehlererkennung auf der Basis der von den drei Komparatoren gelieferten Ausgangssignale durch, liegt die Erkenntnis, daß ein Leitungsfehler vorhanden ist, erst nach der Bewertung der Leitungspotentiale durch die Komparatoren vor. Erst danach kann die Umschaltung auf den Ausgang des für den festgestellten Leitungszustand geeigneten Komparators geschehen. Da für eine Reaktion der Komparatoren die Potentiale auf den Leitungen sich erst bis zu dem Umschaltschwellenwert des jeweiligen Komparators ändern müssen, der üblicherweise im Bereich der Mitte zwischen dem niedrigen und dem hohen Potential des Datenübertragungssystems liegt, ist eine Auswertung erst nach dem Durchlaufen eines beträchtlichen Teils der jeweiligen Impulsflanken möglich. Problematisch ist auch, daß beispielsweise auf Grund von unterschiedlichen kapazitiven Belastungen der beiden Leitungen die bei einem Bitwechsel auf der einen Leitung auftretende ansteigende Impulsflanke und die auf der anderen Leitung auftretende abfallende Impulsflanke unterschiedliche Flankensteilheit und auch Flankendauer haben können. Die Zeitpunkte, zu welchen der zweite und der dritte Komparator auf einen Bitwechsel reagieren, sind in diesem Fall unterschiedlich. Um zu vernünftigen Auswertungsergebnissen zu kommen, müßte man innerhalb eines vorbestimmten Zeitfensters beobachten, ob nach dem Zeitpunkt, zu welchem der zweite oder der dritte Komparator eine Impulsflanke meldet, auch der andere dieser beiden Komparatoren eine Impulsflanke signalisiert. Ohne diese Maßnahme würde die Fehlererkennungsschaltung zu dem Zeitpunkt, zu welchem zunächst nur der eine dieser beiden Komparatoren eine Impulsflanke meldet, der andere dieser beiden Komparatoren aber noch nicht, fälschlicherweise davon ausgegangen, daß die Leitung, deren Komparator noch keine Impulsflanke signalisiert hat, fehlerhaft ist. Zur Realisierung dieser mit Zeitfenster arbeitenden Lösung müßte man einen Zähler einsetzen. Nachteilig bei dieser Lösung ist einerseits, daß man einen sehr schnellen Zähler benötigt, und andererseits daß mit einem vorgegebenen Zeitfenster nur Abweichungen der zueinander gehörenden Impulsflanken auf den beiden Leitungen bis zu einem dem gewählten Zeitfenster entsprechenden Ausmaß erfaßt werden können.

Der Erfindung liegt die Aufgabe zugrunde, eine Fehlererkennungsmöglichkeit verfügbar zu machen, welche eine Fehlererkennung schon unmittelbar nach dem Flankenbeginn und daher eine Reaktion auf einen festgestellten Leitungsfehler schon zu diesem frühen Zeitpunkt sicher ermöglicht.

Diese Aufgabe läßt sich mit einer Leitungsfehlerprüfschaltung der im Patentanspruch 1 angegebenen Art lösen.

Erfindungsgemäß werden die Signale auf den beiden Leitungen je differenziert und die resultierenden Differentialsignale zusammen mit einem Referenzsignal summiert. Aus einem Vergleich des Summensignals mit dem Referenzsignal einerseits und einem Vergleich eines jeden der beiden Differentialsignale mit dem Summensignal andererseits kann darauf geschlossen werden, ob die Leitungen fehlerfrei sind, ob eine der beiden Leitungen offen ist oder einen Kurzschluß aufweist oder ob die beiden Leitungen miteinander kurzgeschlossen sind. Mit dem resultierenden Vergleichsergebnis kann dann bei der Decodierung der übertragenen Datenimpulse auf den Ausgang desjenigen der Komparatoren umgeschaltet werden, der für den festgestellten Leitungszustand zu einem richtigen Decodierungsergebnis führt. Da die Differentialsignale und damit das Summensignal bereits ab dem jeweiligen Flankenbeginn vorliegen, ist zu diesem frühen Zeitpunkt bereits eine Fehlerbeurteilung und eine daraus resultierende Umschaltung auf den Ausgang des geeigneten Komparators möglich. Da auch bei unsymmetrischem Leitungsverhalten, beispielsweise auf Grund von unterschiedlicher kapazitiver Belastung der beiden Leitungen, die Impulsflanken auf beiden Leitungen gleichzeitig beginnen, fällt das Zeitfenster-Problem bei der erfindungsgemäßen Methode nicht an.

Bei einer bevorzugten Ausführungsform werden zum Differenzieren ein Kondensator in jeder der beiden Leitungen und zum Summieren drei Widerstände verwendet. Diese sind in einem Summierungspunkt zusammengeschaltet, wobei ein erster dieser Widerstände den Summierungspunkt mit der einen Leitung, ein zweiter dieser Widerstände den Summierungspunkt mit der anderen Leitung und der dritte Widerstand den Summierungspunkt mit einer Referenzspannungsquelle verbindet. Als Differentialsignale können Differentialspannungen verwendet werden, was zu einer Summenspannung führt, und als Referenzsignal kann eine Referenzspannung verwendet werden.

Bei einer bevorzugten Ausführungsform sind für den Vergleich der sich dabei ergebenden Summenspannung mit der Referenzspannung einerseits und für den Vergleich der sich dabei ergebenden Differentialspannungen der beiden Leitungen mit der Summenspannung andererseits Komparatoren vorgesehen, deren Ausgangssignale mittels einer Logikschaltung ausgewertet und zu Beurteilungssignalen umgesetzt werden. Wenn das jeweilige Beurteilungssignal zu dem Ergebnis führt, daß kein Leitungsfehler festgestellt worden ist, wird für die Decodierung das Ausgangssignal des die Potentiale der beiden Leitungen vergleichenden Komparators herangezogen. Tritt ein Beurteilungssignal in Form eines Fehlersignals auf, wird bei der Decodierung auf das Ausgangssignal eines der beiden Komparatoren zurückgegriffen, welche je das Potential nur einer der beiden Leitungen auswerten.

Die Ausgänge der die Leitungspotentiale auswertenden Komparatoren können auf einen Multiplexer geführt werden, der einen Datenausgang, an dem die decodierten Daten abgenommen werden, je nach der Art des jeweiligen Beurteilungssignals entweder auf den Ausgang des die Potentiale der beiden Leitungen miteinander vergleichenden Komparators, auf den Ausgang des das Potential der ersten Leitung auswertenden Komparators oder den Ausgang des das Potential der zweiten Leitung auswertenden Komparators durchschaltet.

Bei einer Ausführungsform der Erfindung wird das Ergebnis des Vergleichs, bei welchem die beiden Differentialsignale je mit dem Summensignal verglichen werden, zur Decodierung der übertragenen Daten herangezogen. Das Decodierergebnis liegt in diesem Fall bereits beim jeweiligen Flankenbeginn vor. Mit dieser Ausführungsform kann man daher eine sehr schnelle Decodierung erreichen. Der die Potentiale der beiden Leitungen miteinander vergleichende Komparator ist bei dieser Ausführungsform nicht erforderlich. Bei Verwendung eines Multiplexers wird das bei dieser Ausführungsform erhaltene Decodierergebnis auf denjenigen Signaleingang des Multiplexers geführt, der für die Verbindung mit dem Ausgang des die beiden Leitungen verbindenden (bei dieser Ausführungsform nicht vorhandenen) Komparators vorgesehen ist.

Weiterbildungen der erfindungsgemäßen Leitungsfehlerprüfschaltung sind in den Ansprüchen 2 bis 13 angegeben. Empfangsschaltungen, die eine erfindungsgemäße Leitungsfehlerprüfschaltung aufweisen, sind in den Ansprüchen 14 und 15 angegeben. Verfahren zur Leitungsfehlerprüfung geben die Ansprüche 16 und 17 an.

Die Erfindung sowie weitere Aufgabenaspekte und Vorteile der Erfindung werden nun anhand von Ausführungsformen näher erläutert. In den Zeichnungen zeigen:

Fig. 1     einen Teil eines differenzmäßig arbeitenden Datenübertragungssystems mit einer erfindungsgemäßen Leitungsfehlerprüfschaltung;

Fig. 2     eine Darstellung eines Signalverlaufs auf den beiden Leitungen eines differenzmäßig arbeitenden Datenübertragungssystems, wenn beide Leitungen intakt sind;

Fig. 3 eine Ausführungsform einer Differenzierschaltung und einer Summierschaltung der erfindungsgemäßen Leitungsfehlerprüfschaltung;

Fig. 4 ein Bewertungsschema für die Auswertung der bei der Ausführungsform nach Fig. 3 auftretenden Signale;

Fig. 5 eine erste Ausführungsform einer erfindungsgemäßen Leitungsfehlerprüfschaltung;

Fig. 6 eine Tabelle von binären Signalen, die an verschiedenen Stellen der in Fig. 5 gezeigten Ausführungsform auftreten, mit einer Auswertung der verschiedenen Signalmuster;

Fig. 7 ein Diagramm zur Veranschaulichung der Bewertung der in Fig. 5 auftretenden Summenspannung; und

Fig. 8 eine zweite Ausführungsform einer erfindungsgemäßen Leitungsfehlerprüfschaltung.

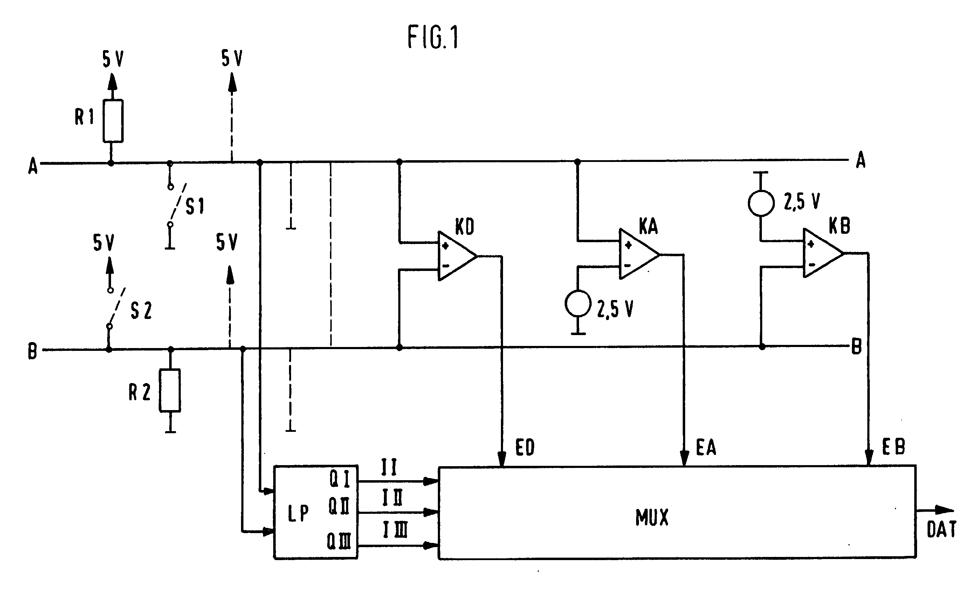

Fig. 1 zeigt eine von mehreren sende- und empfangsfähigen Datenstellen eines differenzmäßig arbeitenden Datenübertragungssystems mit einer als Schaltungsblock dargestellten Leitungsfehlerprüfschaltung LP. Das Datenübertragungssystem umfaßt zwei Leitungen A und B, über welche Datenimpulse gegenläufig in der Weise übertragen werden, daß bei einem ersten Logikwert, beispielsweise "1", der Datenimpulse ein hohes Potential von beispielsweise 5V auf der ersten Leitung A und ein niedriges Potential von beispielsweise 0V auf der zweiten Leitung B und bei einem zweiten Logikwert "0" der Datenimpulse ein niedriges Potential von 0V auf der ersten Leitung A und ein hohes Potential von 5V auf der zweiten Leitung B erzeugt werden. Dies wird mittels Schaltern S1 und S2 erreicht, welche die erste Leitung A mit dem niedrigen Potential bzw. die zweite Leitung B mit dem hohen Potential verbinden. Dabei werden beide Schalter S1 und S2 synchron geschaltet derart, daß sie beide entweder nichtleitend oder leitend geschaltet sind. Bei leitendgeschalteten Schaltern S1 und S2 sind die Leitungen A und B mit den an die Schalter angeschlossenen Potentialen verbunden. Bei nichtleitenden Schaltern S1 und S2 sind die beiden Leitungen A und B über einen Widerstand R1 mit dem hohen Potential bzw. über einen Widerstand R2 mit dem niedrigen Potential verbunden.

Entlang der Leitungen A und B ist eine Vielzahl solcher Datenstellen mit Schaltern S1 und S2 angeordnet. Sind die beiden Schalter S1 und S2 einer Datenstelle leitend geschaltet, sind die dadurch bewirkten Potentiale auf den Leitungen A und B allen anderen Datenstellen unabhängig von den Schalterstellungen von deren Schaltern S1 und S2 aufgezwungen. Daher nennt man den Schaltzustand, in dem beide Schalter S1 und S2 einer Datenstelle leitend sind, dominant. Befinden sich in einer Datenstelle die beiden Schalter S1 und S2 im nichtleitenden Zustand, kann der resultierende Potentialzustand auf den Leitungen A und B durch Leitendschalten der Schalter S1 und S2 einer anderen Datenstelle überspielt werden. Den Schaltzustand nichtleitender Schalter S1 und S2 und den zugehörigen Potentialzustand auf den beiden Leitungen A und B bezeichnet man daher als rezessiv.

Zur Decodierung der jeweils übertragenen Datenimpulse und der daraus resultierenden Potentiale auf den Leitungen A und B werden diese Potentiale mittels eines Decodierkomparators KD miteinander verglichen. Dieser besitzt einen mit der Leitung A verbundenen nichtinvertierenden und einen mit der Leitung B verbundenen invertierenden Eingang. KD subtrahiert somit den Potentialwert auf Leitung B von dem Potentialwert auf Leitung A. Bei der Annahme, daß dem rezessiven Zustand ein hohes Potential auf Leitung A und ein niedriges Potential auf Leitung B und dem dominanten Zustand ein niedriges Potential auf Leitung A und ein hohes Potential auf Leitung B zugeordnet sind, entsteht am Ausgang des Decodierkomparators KD beim rezessiven Leitungszustand ein Logikwert "1" und beim dominanten Leitungszustand ein Logikwert "0". Mit KD wird somit eine Bitauswertung der jeweiligen Leitungspotentiale auf den Leitungen A und B durchgeführt. Das heißt, am Ausgang von KD tritt eine decodierte Binärimpulsfolge auf.

In Fig. 1 sind gestrichelt verschiedenartige Leitungsfehler angedeutet. Jede der beiden Leitungen kann fehlerhaft zum hohen Potential bzw. zum niedrigen Potential (beispielsweise Systemmasse) kurzgeschlossen sein. Es besteht aber auch die Möglichkeit, daß beide Leitungen fehlerhaft miteinander verbunden sind.

Es gibt Leitungsfehler, bei welchen mit KD noch eine fehlerfreie, sichere Decodierung möglich ist. Es gibt andere Leitungsfehler, bei welchen sich das Ausgangssignal von KD nicht mehr ändert, somit nicht zur Decodierung taugt. Für diese Fälle sind weitere Decodierkomparatoren KA und KB vorgesehen, welche das Potential auf Leitung A bzw. das Potential auf Leitung B mit einem zwischen dem hohen Potential und dem niedrigen Potential liegenden Mittenpotential vergleichen, das beispielsweise im Bereich von 2,5V liegt. Das Ausgangssignal von KA liefert ein sicheres, fehlerfreies decodiertes Signal, wenn Leitung B zum hohen oder niedrigen Potential kurzgeschlossen ist, Leitung A jedoch fehlerfrei ist. Gleichermaßen läßt sich mit dem Ausgangssignal von KB eine sichere Decodierung durchführen, wenn die Leitung A kurzgeschlossen oder offen ist, während Leitung B fehlerfrei ist. Sind beide Leitungen miteinander kurzgeschlossen, weisen sie jeweils gleiche Potentiale auf, so daß mit KD eine Decodierung nicht möglich ist. In diesem Fall kann das Ausgangssignal von KA oder von KB zur Decodierung herangezogen werden.

Ein Datenausgang DAT, an welchem das decodierte Datensignal abnehmbar ist, ist mit den Ausgängen der Decodierkomparatoren KD, KA und KB über einen Multiplexer MUX verbunden, mittels welchem der Datenausgang DAT zu dem Ausgang eines der drei Decodierkomparatoren KD, KA und KB durchgeschaltet werden kann. Zu diesem Zweck weist der Multiplexer MUX drei Signaleingänge ED, EA und EB auf, die mit den Ausgängen von KD bzw. KA bzw. KB verbunden sind. Das Durchschalten von DAT auf ED, EA oder EB geschieht in Abhängigkeit von einem Fehlersignalmuster, das dem Multiplexer MUX über drei Schaltsignaleingänge I I, I II und I III von einer eingangsseitig mit den beiden Leitungen A und B verbundenen Leitungsfehlerprüfschaltung LP zugeführt wird. Tritt an I I bis I III ein Fehlersignalmuster auf, das als Leitungsfehlerfreiheit interpretiert wird, ist der Datenausgang DAT von MUX mit dem Dateneingang ED verbunden. Beim Auftreten von Fehlersignalmustern, welche einen Leitungsfehler der Leitung A oder der Leitung B signalisieren, ist DAT zu EB bzw. EA durchgeschaltet. Geht aus dem Fehlersignalmuster hervor, daß ein Kurzschluß zwischen den Leitungen A und B vorliegt, wird DAT entweder auf EA oder auf EB durchgeschaltet. Bei Datenübertragungssystemen, bei welchen dem rezessiven Zustand ein hohes Potential auf Leitung A und bei dominantem Zustand ein hohes Potential auf Leitung B zugeordnet ist, wird bei einem Kurzschluß zwischen den Leitungen A und B der Datenausgang DAT vorzugsweise zu EB durchgeschaltet. Das heißt, zur Decodierung wird in diesem Leitungsfehlerfall das Potential auf Leitung B, also der Ausgang des Decodierkomparators KB herangezogen.

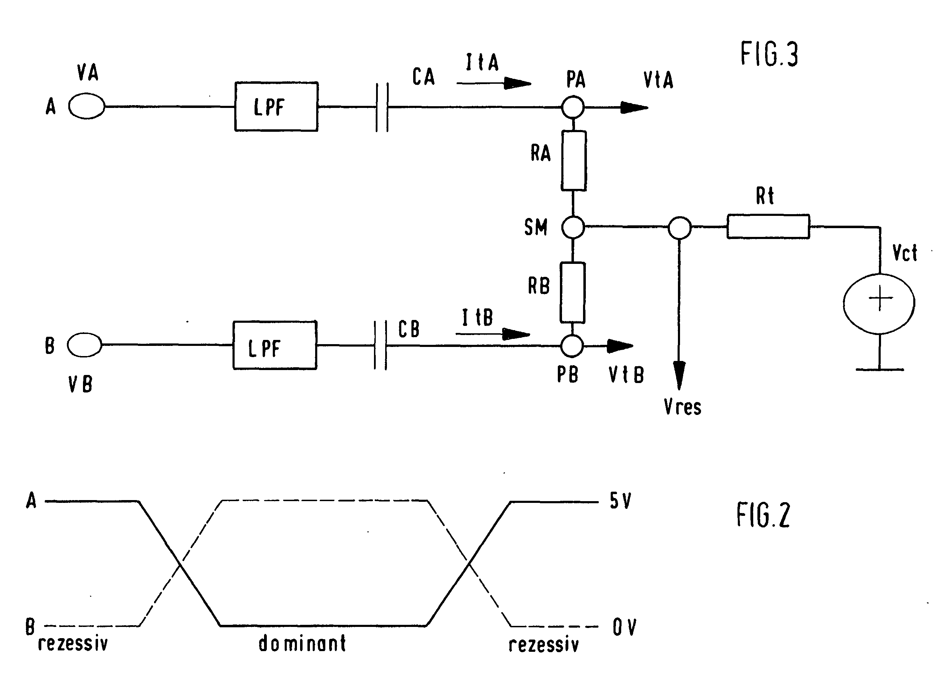

Fig. 2 zeigt für das Datenübertragungssystem in Fig. 1 Potentialverläufe auf den beiden Leitungen A und B für dominante und für rezessive Leitungszustände. Sowohl während eines dominanten Zustandes als auch während eines rezessiven Zustandes treten auf beiden Leitungen A und B konstante Potentiale von beispielsweise 5V bzw. 0V auf. Dieser Leitungszustand wird im Zusammenhang mit der vorliegenden Erfindung als Ruhezustand betrachtet. Bei Logikwertänderungen der über die Leitungen A und B übertragenen Datenimpulse treten Übergangsflanken der in Fig. 2 gezeigten Art auf. Bei einem Übergang von einem rezessiven Zustand zu einem dominanten Zustand weist das Potential auf Leitung A eine von 5V auf 0V abfallende Flanke und das Potential auf Leitung B eine von 0V auf 5V übergehende Flanke auf. Beim Übergang von einem dominanten Zustand zu einem rezessiven Zustand treten entgegengesetzt gerichtete Flanken auf den Leitungen A und B auf.

Bei der Darstellung in Fig. 2 ist davon ausgegangen, daß symmetrische Verhältnisse für beide Leitungen vorliegen. Dies trifft in der Praxis häufig nicht zu, beispielweise wenn beide Leitungen unterschiedlich stark kapazitiv belastet sind. In diesem Fall können die während eines Wechsels vom dominanten Zustand zum rezessiven Zustand oder umgekehrt auf beiden Leitungen auftretenden Flanken unterschiedlich steil und/oder unterschiedlich lang sein.

Fig. 3 zeigt eine Ausführungsform des Differenzier- und Summier-Teils einer erfindungsgemäßen Leitungsfehlerprüfschaltung. Eine Differenzierschaltung weist zwei Differenzierer auf, die durch einen in die Leitung A geschalteten Kondensator CA und einen in die Leitung B geschalteten Kondensator CB gebildet sind. CA und CB ist je ein Tiefpaßfilter LPF vorgeschaltet, um beispielsweise elektromagnetische Störsignale zu unterdrücken.

Widerstände RA, RB und Rt in Fig. 3 bilden eine Summierschaltung. Dabei ist ein Summierschaltungsknoten SM über den Widerstand RA mit einem Schaltungspunkt PA der Leitung A, über den Widerstand RB mit einem Schaltungspunkt PB der Leitung B und über den Widerstand Rt mit einer Referenzspannungsquelle REF verbunden, welche eine Referenzspannung Vct liefert.

Auf Grund der differenzierenden Wirkung von CA und CB treten Differentialströme IA und IB nur während Flanken auf den Leitungen A bzw. B auf. Während Ruhezuständen der Leitungen A und B sind die Differentialströme IA und IB daher 0.

Mathematisch läßt sich das Verhalten der Schaltung in Fig. 3 folgendermaßen ausdrücken:

$$ItA \quad = \quad CA \bullet \quad dVA/dt \tag{1}$$

$$ItB \quad = \quad CB \bullet \quad dVB/dt \tag{2}$$

$$VtA \quad = \quad P1 \bullet \quad dVA/dt \tag{3}$$

$$VtB \quad = \quad P2 \bullet \quad dVB/dt \tag{4}$$

$$Vres \quad = \quad Vta + VtB + Vct \tag{5}$$

$$Vres \quad = \quad P1 \bullet \quad dVA/dt \quad + \quad P2 \bullet \quad dVB/dt \tag{6}$$

Dabei bedeuten:

VA = Potential auf Leitung A
VB = Potential auf Leitung B
ItA = Differentialstrom des Kondensators CA
ItB = Differentialstrom des Kondensators CB
P1 = Erste Konstante
P2 = Zweite Konstante
Vres = Resultierende Spannung am Summierungsschaltungsknoten SM

Befinden sich beide Leitungen A und B im Ruhezustand, sind also beide Leitungspotentiale konstant, sind die Differentialströme ItA und ItB und somit die Differentialspannung VtA und VtB je Null. Dies führt zu

$$Vres = Vct \tag{7}$$

Tritt auf einer Leitung eine steigende oder positive Flanke auf, führt dies zu einem positiven Differentialstrom und zu einer entsprechenden positiven Differentialspannung. Eine abfallende oder negative Flanke hat einen negativen Differentialstrom und eine entsprechende negative Differentialspannung zur Folge.

Treten im fehlerfreien Leitungszustand auf beiden Leitungen A und B gleichzeitig entgegengesetzt gerichtete Flanken mit gleicher Flankensteilheit auf, entstehen Differentialströme ItA und ItB gleichen Betrages aber entgegengesetzter Richtung. Durch Rt fließen daher zwei betragsmäßig gleiche Ströme entgegengesetzten Vorzeichens, so daß sich deren Stromflüsse im Widerstand Rt aufheben. Dies führt wieder zu der Beziehung (7).

Ist eine der beiden Leitungen offen oder zu dem niedrigen oder hohen Potential kurzgeschlossen, so daß ihr Potential permanent konstant bleibt, bleiben der zugehörige Differentialstrom und die zugehörige Differentialspannung Null. Da der zugehörige Widerstand RA bzw. RB nicht von Strom durchflossen wird, bleibt der zugehörige Schaltungsknoten PA bzw. PB auf der Summenspannung Vres des Summierungsschaltungsknotens SM. Je nach dem, ob auf der intakten anderen Leitung gerade eine ansteigende oder eine abfallende Flanke vorhanden ist, werden der zu dieser intakten Leitung gehörige Widerstand RA bzw. RB und der Widerstand Rt von einem zur Referenzspannungsquelle REF fließenden bzw. von einem aus der Referenzspannungsquelle REF kommenden Strom durchflossen. Daher ist in diesem Fall die Summenspannung Vres größer bzw. kleiner als Vct und ist das Potential am Schaltungsknoten PA bzw. BP größer bzw. kleiner als Vres.

Diese Erscheinungen kann man zur Leitungszustandsüberprüfung oder Leitungsfehlerprüfung nutzen.

Ist Vres = Vct, befinden sich die Leitungen im Ruhezustand oder weisen beide Leitungen gerade entgegengesetzt gerichtete Impulsflanken gleicher Steilheit auf. Ist Vres ≠ Vct, liegt ein Verhalten der beiden Leitungen A und B vor, das von dem in Fig. 2 dargestellten Verhalten abweicht, was auf einen Leitungsfehler hindeutet. Ist eine der Differentialspannungen VtA und VtB gleich Vres und die andere ungleich Vres, ist eine der beiden Leitungen A und B ausgefallen, weil sie kurzgeschlossen oder offen ist, während die andere Leitung intakt ist. In diesem Fall kann daraus, welcher der Schaltungsknoten PA und PB eine Differentialspannung aufweist, welche gleich Vres ist, und welcher dieser beiden Schaltungsknoten ein Potential aufweist, das größer oder kleiner als Vres ist, ermittelt werden, welche der beiden Leitungen ausgefallen ist. Ist Vres ≠ Vct, sind jedoch beide Differentialspannungen VtA und VtB gleich Vres, folgt, daß beide Leitungen miteinander kurzgeschlossen sind.

Die Betrachtung, daß im fehlerfreien Zustand beider Leitungen im Bereich von Flanken Vres = Vct ist, gilt allerdings nur unter der Voraussetzung, daß beide Leitungen ein symmetrisches Verhalten der in Fig. 2 dargestellten Art aufweisen. Ist das Verhalten beider Leitungen unsymmetrisch, beispielsweise auf Grund von unterschiedlichen kapazitiven Belastungen, was zu Flanken unterschiedlicher Flankensteifheit auf den beiden Leitungen führt, ergeben sich unterschiedlich große Differentialströme ItA und ItB und damit Vres ≠ Vct trotz Leitungsfehlerfreiheit. Daher empfiehlt es sich, bei dem Vergleich von Vres mit Vct für Vres eine Abweichung vorbestimmten Ausmaßes innerhalb eines Bereichs beidseits von Vct zuzulassen, innerhalb welchem noch von Leitungsfehlerfreiheit ausgegangen wird. Nur wenn Vres diesen Bereich verläßt, wird in diesem Fall von dem Vorliegen eines Leitungsfehlers ausgegangen.

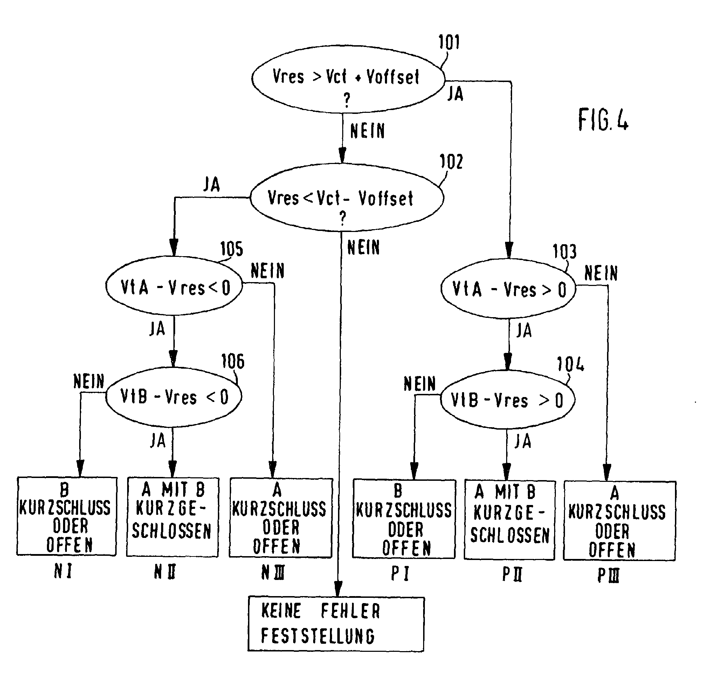

In Fig. 4 ist ein Entscheidungsdiagramm gezeigt, welches bei der Ermittlung, ob Leitungsfehler vorliegen oder nicht, Unsymmetrien beider Leitungen A und B in einem Maß zuläßt, das durch Abweichspannungen Voffset definiert wird. Bei dem Entscheidungsdiagramm in Fig. 4 sind sechs Entscheidungsebenen 101 bis 106 vorgesehen, wobei hinsichtlich des jeweiligen Unterscheidungskriteriums auf die Angaben in Fig. 4 Bezug genommen wird.

Wenn anhand der Entscheidungskriterien 101 und 102 festgestellt wird, daß Vres sowohl in positiver als auch in negativer Richtung innerhalb der Bandbreite von Vct ± Voffset bleibt, wird davon ausgegangen, daß kein Leitungsfehler vorliegt. Wird diese Bandbreite in positiver Richtung überschritten, wird dies als Hinweis darauf aufgefaßt, daß auf mindestens einer der beiden Leitungen eine positive Flanke vorhanden ist. Dies führt zur Entscheidungsebene 103. Führt deren Entscheidungskriterium zu der Aussage, daß die Differentialspannung am Schaltungsknoten PA nicht größer als Vres ist, bedeutet dies, daß eine positive Flanke nicht auf Leitung A sondern nur auf Leitung B sein kann. Dies weist darauf hin, daß Leitung A offen ist oder einen Kurzschluß zum niedrigen oder zum hohen Potential aufweist. Ist dagegen VtA > Vres, weist dies auf eine positive Flanke auf Leitung A hin. Mittels der Entscheidungsebene 104 wird dann festgestellt, ob eine positive Flanke auch auf Leitung B vorhanden ist. Ist auch VtB > Vres, heißt dies, daß eine positive Flanke sowohl auf Leitung A als auch auf Leitung B erscheint. Dies bedeutet, daß die Leitungen A und B miteinander kurzgeschlossen sind. Ist dagegen VtB nicht größer als Vres, zeigt dies, daß eine positive Flanke nur auf Leitung A vorhanden ist, nicht jedoch auf Leitung B. Dies bedeutet, daß Leitung B offen ist oder einen Kurzschluß nach niedrigem oder hohen Potential aufweist.

Hat Entscheidungsebene 102 gezeigt, daß Vres um mehr als Voffset negativer ist als Vct, bedeutet dies, daß auf mindestens einer der beiden Leitungen A und B eine negative Flanke vorhanden sein muß. Wird in diesem Fall anhand der Entscheidungsebenen 105 und 106 festgestellt, daß eine negative Flanke nicht auf A bzw. nicht auf B vorhanden ist, wird von einer offenen Leitung oder einem Kurzschluß zu niedrigem oder hohen Potential von Leitung A bzw. Leitung B ausgegangen. Erweist sich jedoch, daß beide Leitungen eine negative Flanke aufweisen, wird wieder davon ausgegangen, daß die Leitungen A und B miteinander kurzgeschlossen sind.

Der Entscheidungsbaum gemäß Fig. 4 führt sowohl in dem Entscheidungszweig, der das Auftreten nur positiver Flanken feststellt, als auch in dem Entscheidungszweig, der das Auftreten nur negativer Flanken feststellt, zu drei Fehlerarten I bis III. Fehlerart I bedeutet in beiden Entscheidungszweigen, daß Leitung B kurzgeschlossen oder offen ist. Fehlerart II bedeutet in beiden Entscheidungszweigen, daß die beiden Leitungen A und B miteinander kurzgeschlossen sind. Fehlerart III bedeutet in beiden Entscheidungszweigen, daß Leitung A kurzgeschlossen oder offen ist.

Je nach dem, ob der Fehler anhand des nach positiven Flanken suchenden rechten Entscheidungszweiges 103, 104 oder anhand des nach negativen Flanken suchenden linken Entscheidungszweiges 105, 106 ermittelt worden ist, ist er in Fig. 4 mit PI, PII, PIII bzw. mit NI, NII, NIII bezeichnet.

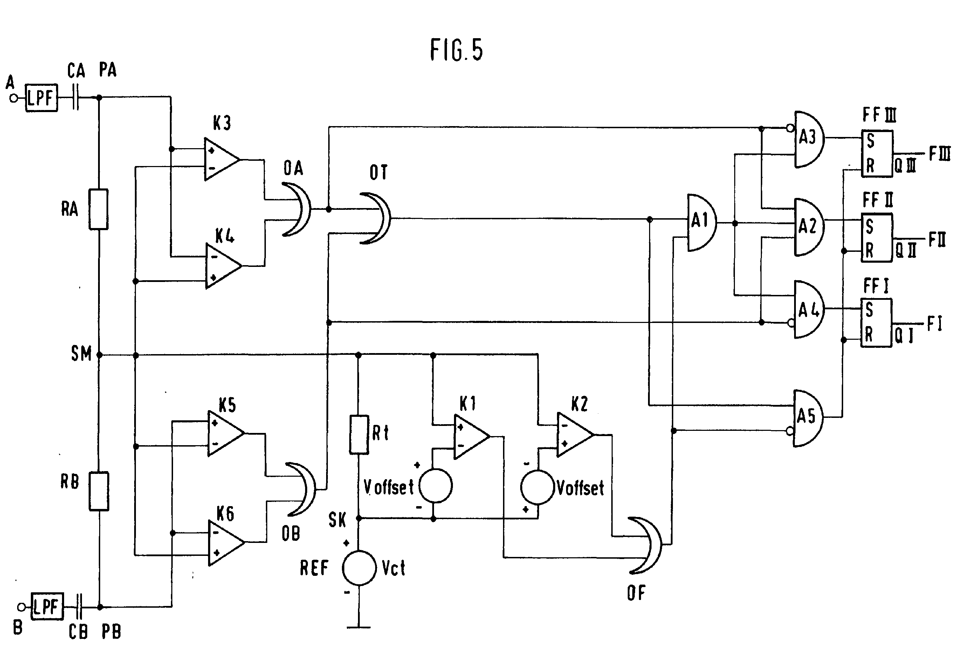

Eine erste Ausführungsform einer erfindungsgemäßen Leitungsfehlerprüfschaltung, welche die Differenzier- und Summierschaltung gemäß Fig. 3 und zusätzlich eine Schaltungsanordnung zur Durchführung der Entscheidungen 101 bis 106 des Entscheidungsbaums der Fig. 4 aufweist, ist in Fig. 5 gezeigt. Hinsichtlich des mit Fig. 3 übereinstimmenden Schaltungsteils wird auf die vorausgehenden Erläuterungen zu Fig. 3 Bezug genommen. Zusätzlich weist die Leitungsfehlerprüfschaltung in Fig. 5 sechs Komparatoren K1 bis K6, vier ODER-Schaltungen OA, OB, OT und OF, fünf UND-Schaltungen A1 bis A5 und drei RS-Flipflops FFI bis FFIII in der in Fig. 5 gezeigten Verschaltung auf. Mit den Komparatoren K1 und K2 werden die Entscheidungen der Entscheidungsebenen 101 bzw. 102 des Entscheidungsbaums der Fig. 4 durchgeführt. Die Komparatoren K3 und K4 dienen zur Durchführung der Entscheidungen der Entscheidungsebenen 103 und 105 in Fig. 4. Die Komparatoren K5 und K6 werden dazu verwendet, die Entscheidungen der Entscheidungsebenen 104 und 106 in Fig. 4 durchzuführen.

Zu diesem Zweck sind ein nichtinvertierender Eingang und ein invertierender Eingang der Komparatoren K1 und K2 mit dem Summierungsschaltungsknoten SM verbunden, während ein invertierender Eingang von K1 und ein nichtinvertierender Eingang von K2 je über eine Offsetspannungsquelle mit dem Spannungswert Voffset mit einem positiven Anschluß der Referenzspannungsquelle RES verbunden sind, deren anderer Anschluß mit dem niedrigen Potential oder Masse verbunden ist. Die beiden Offsetspannungsquellen sind in der in Fig. 5 gezeigten Weise gepolt.

Die Ausgangssignale der Komparatoren K1 und K2 werden mit Hilfe der ODER-Schaltung OF einer ODER-Verknüpfung unterzogen. Die Ausgangssignale der Komparatoren K3 und K4 werden mit Hilfe der ODER-Schaltung OA einer ODER-Verknüpfung unterzogen, während die Ausgangssignale der Komparatoren K5 und K6 mittels der ODER-Schaltung OB einer ODER-Verknüpfung unterzogen werden. Die Ausgangssignale von OA und OB werden mittels der ODER-Schaltung OT einer ODER-Verknüpfung unterzogen. Eine UND-Verknüpfung der Ausgangssignale von OT und OF findet mittels der UND-Schaltung A1 statt. Die Ausgangssignale von OA, OB und A1 werden mittels A2 einer UND-Verknüpfung unterzogen. Mit A3 und A4 werden das Ausgangssignal von A1 und das negierte Ausgangssignal von OA bzw. das negierte Ausgangssignal von OB einer UND-Verknüpfung unterzogen. A5 führt eine UND-Verknüpfung des Ausgangssignals von OT und des negierten Ausgangssignals von OF durch. Während der Ausgang von A5 mit Rücksetzeingängen R aller drei Flipflops FFI bis FFIII verbunden ist, sind Setzeingänge S von FFI bis FFIII mit dem Ausgang von A4 bzw. dem Ausgang von A2 bzw. dem Ausgang von A3 verbunden. Ausgangsanschlüsse Q1 bis Q3 liefern Fehlersignale FI bis FIII.

Hinsichtlich der genauen Verschaltung der einzelnen Schaltungskomponenten dieser Leitungsfehlerprüfschaltung wird auf die Darstellung in Fig. 5 hingewiesen.

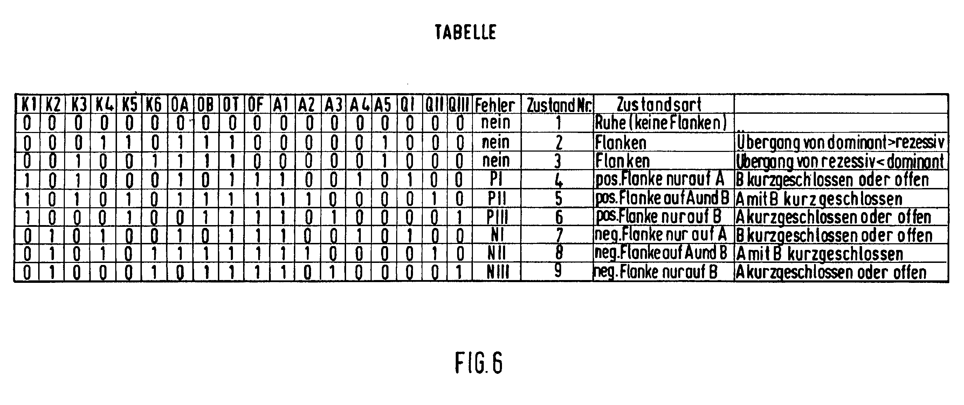

Das Verhalten der in Fig. 5 gezeigten Leitungsfehlerprüfschaltung wird nun anhand der als Fig. 6 beigefügten Tabelle betrachtet. In dieser Tabelle sind die Logikwerte an den Ausgängen der in der obersten Zeile dieser Tabelle angegebenen Schaltungskomponenten der Fig. 5 dargestellt, und zwar für neun Zustände der Leitungen A und B, wie sie in der Spalte "Zustands Nr." angegeben sind.

Wenn die Ausgänge von K1 und K2 den Logikwert "0" haben, weil die Summenspannung Vres innerhalb des Bereichs Vct ± Vct liegen, weist auch die ODER-Schaltung OF einen Logikwert "0" auf, was auf Leitungsfehlerfreiheit hinweist. Dieser Schaltungszustand ist für die Zustände Nr. 1 bis 3 gegeben, nämlich wenn sich beide Leitungen im Ruhezustand befinden oder wenn auf beiden Leitungen in gegenläufiger Weise Flanken in der einen Richtung oder in der anderen Richtung vorhanden sind. Ob sich die Leitungen im Ruhezustand befinden oder ob die fehlerfreien Leitungen Flanken aufweisen, sieht man am Ausgangslogikwert der ODER-Schaltung OT. Diese weist einen Ausgangslogikwert "1" immer dann auf, wenn sich auf mindestens einer der beiden Leitungen eine Flanke befindet.

In den drei Zuständen 1 bis 3 befinden sich die Ausgänge Q1 bis Q3 aller drei Flipflops FFI bis FFIII auf dem Logikwert "0". Dieses Ausgangssignalmuster wird als fehlerfreier Leitungszustand interpretiert.

Ein Logikwert "1" am Ausgang von K1 bei gleichzeitigem Auftreten eines Logikwertes "0" am Ausgang von K2 weist darauf hin, daß auf mindestens einer der beiden Leitungen A und B eine positive Flanke, jedoch auf keiner der beiden Leitungen eine negative Flanke vorhanden ist. Dies gilt für die Zustände 4 bis 6. Ein Logikwert "0" am Ausgang von K1 bei gleichzeitigem Auftreten eines Logikwertes "1" am Ausgang von K2 weist darauf hin, daß auf mindestens einer der beiden Leitungen A und B eine negative Flanke, jedoch auf keiner der beiden Leitungen auch eine positive Flanke vorhanden ist. Dies trifft für die Zustände 7 bis 9 zu.

Auf welcher Leitung sich bei den positiven Zuständen 4 bis 6 eine positive Flanke befindet, zeigt das Ausgangssignalmuster der Komparatoren K3 und K5, welche für die Feststellung positiver Flanken zuständig sind. Weist nur der Ausgang von K3 einen Logikwert "1" auf, ist eine positive Flanke nur auf Leitung A vorhanden, muß also Leitung B kurzgeschlossen oder offen sein (Zustand 4). Weist einen Logikwert "1" nur der Ausgang von K5 auf, befindet sich eine positive Flanke nur auf Leitung B und muß Leitung A kurzgeschlossen oder offen sein (Zustand 6). Weisen beide Komparatoren K3 und K5 an ihrem Ausgang einen Logikwert "1" auf (Zustand 5), ist eine positive Flanke sowohl auf Leitung A als auch auf Leitung B vorhanden, so daß ein Kurzschluß zwischen den Leitungen A und B vorhanden sein muß.

Entsprechende Überlegungen gelten für die Zustände 7 bis 9 für das Ausgangssignalmuster der Komparatoren K4 und K6, die für die Feststellung negativer Flanken zuständig sind.

Während man also mit dem Ausgangssignalmuster von K1 und K2 feststellen kann, ob die Leitungen fehlerfrei sind oder nicht, kann man mit dem Ausgangssignalmuster von K3 bis K6 feststellen, welche Leitungsfehlerart vorhanden ist.

In allen Fehlerzuständen 4 bis 9 weist der Ausgang der ODER-Schaltung OF einen Logikwert "1" auf, was einen Leitungsfehler signalisiert. Während sich anhand des Ausgangssignals vom OT feststellen läßt, ob eine Aktivität auf den Leitungen vorhanden ist, das heißt, auf mindestens einer Leitung eine Flanke vorhanden ist, läßt sich am Ausgangssignal von OF ablesen, ob ein als fehlerfrei beurteilter Leitungszustand oder ein als Fehler behafteter Leitungszustand vorliegt.

Mittels der UND-Schaltungen A1 bis A5 wird eine Logikverknüpfung durchgeführt, welche beim Vorliegen der Leitungszustände 1 bis 3 zu einem Logikwert "0" an den Ausgängen aller drei Flipflops FFI bis FFIII, bei den Leitungszuständen 4 und 7 zu einem Logikwert "1" nur am Ausgang von FFI, bei den Leitungszuständen 5 und 8 zu einem Logikwert "1" nur am Ausgang von FII und bei den Leitungszuständen 6 und 9 zu einem Logikwert "1" nur am Ausgang von FFIII führt. Aus dem Logikwertmuster an den Ausgängen Q1 bis Q3 läßt sich somit auf Fehlerfreiheit oder auf das Vorliegen eines bestimmten Leitungsfehlers schließen.

Betrachtet man nun wieder Fig. 1, so ist dort dargestellt, daß die Schaltsignaleingänge I I, I II und I III mit den Ausgängen QI bzw. QII bzw. QIII der in Fig. 5 gezeigten Leitungsfehlerprüfschaltung verbunden sind. Der Multiplexer MUX ist (in nicht dargestellter Weise) intern so aufgebaut, daß er den Datenausgang DAT dann mit dem Signaleingang ED verbindet, wenn QI bis QIII je den Logikwert "0" aufweisen, daß DAT beim Auftreten eines Logikwertes "1" am Ausgang QI zum Signaleingang EA durchgeschaltet wird und daß DAT beim Auftreten eines Logikwertes "1" am Ausgang QII oder am Ausgang QIII zum Signaleingang EB durchgeschaltet wird. Während der fehlerfreien Zustände 1 bis 3 ist somit DAT mit dem Ausgang des die Potentiale der beiden Leitungen miteinander vergleichenden Decodierkomparators KD verbunden. Beim Auftreten der Leitungszustände 4 und 7, wenn also die Leitung A in Ordnung ist, die Leitung B dagegen kurzgeschlossen oder offen, ist DAT mit dem Ausgang von KA verbunden, welcher das Potential nur der Leitung A bewertet. Im Fall der Zustände 5, 6, 8 und 9 ist DAT mit dem Ausgang von KB verbunden, der das Potential lediglich der Leitung B bewertet.

Der Ausgang der UND-Schaltung A5 weist nur dann einen Logikwert "1" auf, wenn auf beiden Leitungen gleichzeitig entgegengesetzt gerichtete Flanken auftreten. Dieser Leitungszustand bewirkt daher ein Rücksetzen der Flipflops FI bis FIII, falls diese sich im gesetzten Zustand befinden, weil zuvor ein Leitungsfehler festgestellt worden ist. Bei allen einen Leitungsfehler bedeutenden Leitungszuständen 4 bis 9 tritt am Ausgang von A5 dagegen ein Logikwert "0" auf, kommt es also nicht zur Rücksetzung dieser Flipflops. War ein Leitungsfehler vorhanden, der inzwischen behoben ist oder sich erledigt hat, findet daher eine Rücksetzung der Flipflops FFI bis FFIII statt, so daß dem Multiplexer MUX ein Schaltsignalmuster zugeführt wird, das zu einem Durchschalten des Datenausgangs DAT auf den Signaleingang ED des Multiplexers MUX führt.

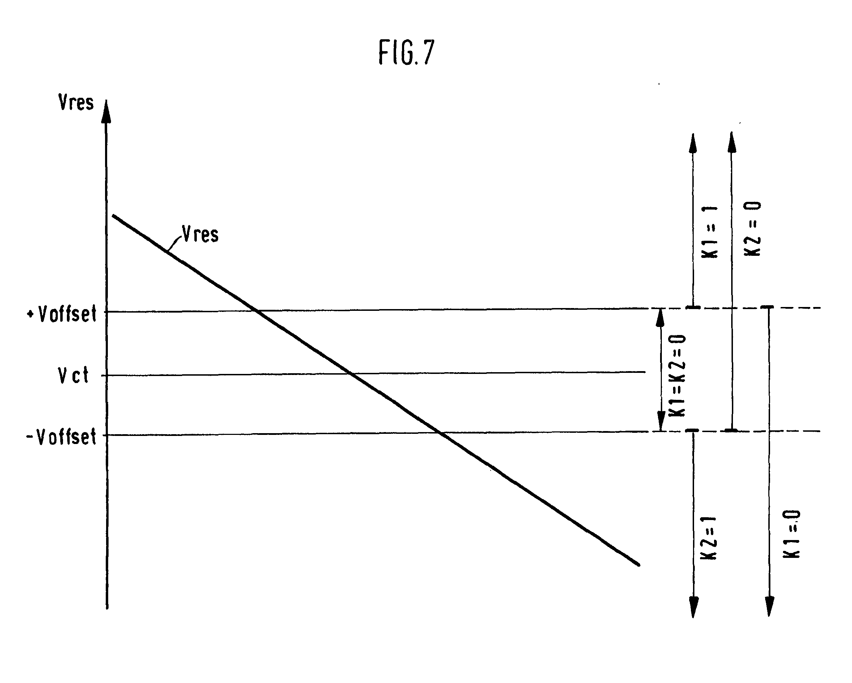

Das Bewertungsschema hinsichtlich eines Vergleichs der Summenspannung Vres mit der Referenzspannung Vct und die resultierenden Signale der Komparatoren K1 und K2 sind in Fig. 7 grafisch veranschaulicht.

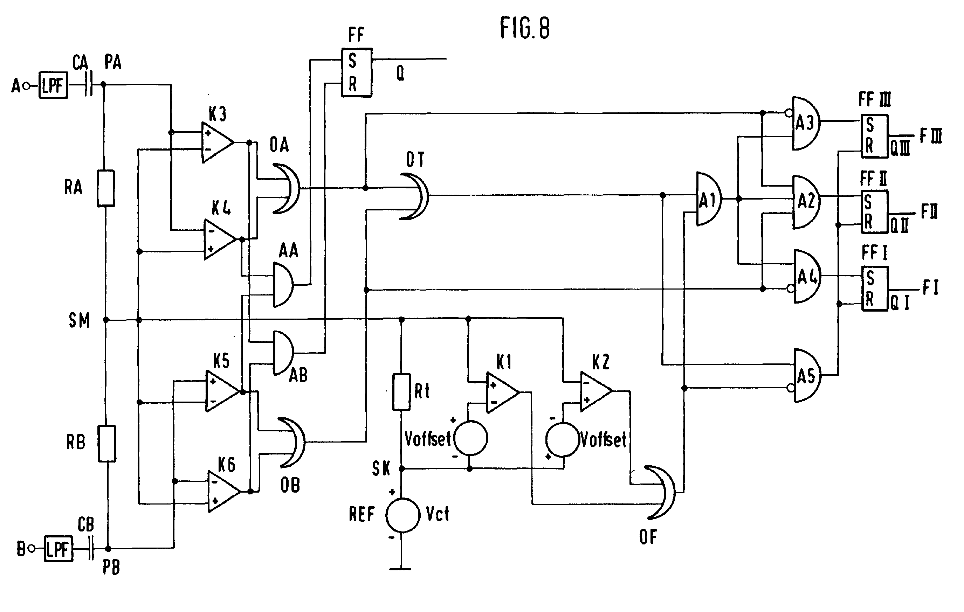

Fig. 8 zeigt eine zweite Ausführungsform einer erfindungsgemäßen Leitungsfehlerprüfschaltung, welche die gesamte in Fig. 5 gezeigte Schaltung und zusätzlich eine Bitbewertungsschaltung AA, AB, FF aufweist. Hinsichtlich des mit Fig. 5 übereinstimmenden Teils dieser Schaltung wird auf die vorausgehenden Erläuterungen zu Fig. 5 verwiesen. Nachfolgend wird daher nur die zusätzliche Bitbewertungsschaltung behandelt.

Eine UND-Schaltung AA bewirkt eine UND-Verknüpfung der Ausgangssignale von K4 und K5, während eine UND-Schaltung AB eine UND-Verknüpfung der Ausgangssignale von K3 und K6 bewirkt. Während ein Logikwert "1" am Ausgang von AA das Flipflop FF in den Setzzustand bringt, wird FF von einem Logikwert "1" am Ausgang von AB rückgesetzt. Wenn bei intakten Leitungen A und B im aktiven Leitungszustand immer auf beiden Leitungen gleichzeitig entgegengesetzt gerichtete Flanken auftreten, befinden sich immer entweder die Ausgänge von K4 und K5 auf dem Logikwert "1" und die Ausgänge von K3 und K6 auf dem Logikwert "0" (Zustand 2) oder die Ausgänge von K4 und K5 auf dem Logikwert 1 und die Ausgänge von K3 und K6 auf dem Logikwert "0". Dabei erscheint am Ausgang entweder von AA oder am Ausgang von AB ein Logikwert "1", am Ausgang des jeweils anderen der UND-Schaltungen AA und AB dagegen der Logikwert "0". Bei aufeinanderfolgenden Potentialübergängen von dominant nach rezessiv und rezessiv nach dominant erscheinen daher Logikwerte abwechselnd am Setzeingang S und am Rücksetzeingang R des Flipflops FF, mit daher eingehenden Wechseln des Ausgangs Q dieses Flipflops FF zwischen den Logikwerten 1 und 0. Am Q-Ausgang von FF steht daher die gleiche Information zur Verfügung, wie sie bei der in Fig. 1 gezeigten Ausführungsform am Ausgang von KD erhalten wird. Das bedeutet, daß man bei einer Datenstelle, die mit einer Empfangsschaltung gemäß Fig. 8 ausgerüstet ist, auf den Decodierungskomparator KD verzichten und den Signaleingang ED des Multiplexers MUX mit dem Ausgang Q des Flipflop FF in Fig. 8 verbinden kann.

Vorteil dieser in Fig. 8 dargestellten Ausführungsform ist, daß die Bitauswertung bereits beim jeweiligen Flankenbeginn zur Verfügung steht, also früher, als sie vom Ausgang des Decodierkomparators KD verfügbar wäre. Daher ist eine decodierende Bitauswertung bei der Ausführungsform nach Fig. 8 bereits zu einem sehr frühen Zeitpunkt eines Bitwechsels möglich. Das mit dem jeweiligen Flankenwechsel eingeleitete Bit ist daher bereits lange Zeit vor dem Zeitpunkt bekannt, zu welchem auf den Leitungen A und B die diesem Bit entsprechenden Potentialwerte erst erreicht sind. Das heißt, schon lange, bevor sich die Potentiale eines neuen Bits auf den Leitungen A und B eingestellt haben, ist ein solches Bit bereits bewertet oder decodiert.

Bei allen Fehlerzuständen 4 bis 9 kommt es unabhängig von der Art des speziell aufgetretenen Leitungsfehlers an den Ausgängen beider UND-Schaltungen AA und AB zu einem Logikwert 0, so daß das Flipflop FF nicht mehr umgeschaltet wird und am Ausgang von FF keine Logikwertwechsel erscheinen.

Eine Empfangsschaltung der in Fig. 1 gezeigten Art, deren Leitungsfehlerprüfschaltung gemäß Fig. 8 ausgebildet ist, ermöglicht im leitungsfehlerfreien Zustand eine sehr frühe Bitbewertung oder Bitdecodierung bereits bei Beginn der jeweiligen Flanken und erlaubt im Fall von Leitungsfehlern deren Erkennung ebenfalls bereits bei Flankenbeginn, so daß rechtzeitig vor dem Zeitpunkt, zu welchem Potentialauswertungen mit den Decodierkomparatoren AA und KB möglich werden, der Multiplexer MUX bereits auf denjenigen der beiden Decodierkomparatoren KA und KB umgeschaltet sein kann, dessen Ausgangssignal trotz des aufgetretenen Leitungsfehlers eine sichere Decodierung ermöglicht.

**Patentansprüche**

1. Leitungsfehlerprüfschaltung für ein elektrisches Datenübertragungssystem mit einer ersten Leitung (A) und einer zweiten Leitung (B) zur differenzmäßigen Übertragung von binären Datenimpulsen in der Form, daß einem ersten Logikwert ("1") der Datenimpulse ein hohes Potential (5V) auf der ersten Leitung (A) und ein niedriges Potential (0V) auf der zweiten Leitung (B) und einem zweiten Logikwert ("0") der Datenimpulse ein niedriges Potential (0V) auf der ersten Leitung (A) und ein hohes Potential (5V) auf der zweiten Leitung (B) zugeordnet sind, wobei die Fehlerprüfschaltung aufweist:

    a) eine Differenzierschaltung (CA, CB), mittels welcher für die erste Leitung (A) ein erstes Differentialsignal (VtA) und für die zweite Leitung (B) ein zweites Differentialsignal (VtB) erzeugbar sind, welche einer zeitlichen Ableitung des Potentialverlaufs der jeweiligen Leitung (A, B) entsprechen;
    b) eine Referenzsignalquelle (REF), mittels welcher ein Referenzsignal (Vct) bereitstellbar ist;
    c) eine Summierschaltung (SM, RA, RB, Rt), mittels welcher ein die Summe aus den beiden Differentialsignalen (VtA, VtB) und dem Referenzsignal (Vct) darstellendes Summensignal (Vres) erzeugbar ist;
    d) eine Beurteilungsschaltung (K1 - K6, OA, OB, OF, OT, A1 - A5, FFI - FFIII), mittels welcher:
    e) ein Leitungsfehlerfreiheit signalisierendes Fehlerfreisignal erzeugt wird, wenn das Summensignal (Vres) dem Referenzsignal (Vct) gleich ist oder innerhalb eines vorbestimmten Bereichs (-Voffset bis +Voffset) beidseits des Referenzsignals liegt;

f) und dann, wenn das Fehlerfreisignal nicht auftritt,

g) ein einen Leitungsfehler der ersten Leitung (A) signalisierendes erstes Fehlersignal (FI) erzeugt wird, wenn das erste Differentialsignal (VtA) gleich dem Summensignal (Vres) ist,

h) ein einen Kurzschluß zwischen beiden Leitungen signalisierendes zweites Fehlersignal (FII) erzeugt wird, wenn beide Differentialsignale (VtA, VtB) vom Summensignal (Vres) verschieden sind, und

i) ein einen Leitungsfehler der zweiten Leitung (B) signalisierendes drittes Fehlersignal (FIII) erzeugt wird, wenn das zweite Differentialsignal (VtB) gleich dem Summensignal (Vres) ist.

2. Leitungsfehlerprüfschaltung nach Anspruch 1, deren Differenzierschaltung (CA, CB) einen ersten Differenzierer in Form eines in die erste Leitung (A) geschalteten ersten Kondensators (CA) und einen zweiten Differenzierer in Form eines in die zweite Leitung (B) geschalteten zweiten Kondensators (CB) aufweist.

3. Leitungsfehlerprüfschaltung nach Anspruch 1 oder 2, deren Referenzsignalquelle (REF) eine Referenzspannungsquelle aufweist.

4. Leitungsfehlerprüfschaltung nach Anspruch 3, deren Summierschaltung (SM, RA, RB, Rt) eine Widerstandsschaltung (RA, RB, Rt) aufweist mit einem Summierungsschaltungsknoten (SM), einem zwischen den Summierungsschaltungsknoten (SM) und den ersten Differenzierer (CA) geschalteten ersten Widerstand (RA), einem zwischen den Summierungsschaltungsknoten (SM) und den zweiten Differenzierer (CB) geschalteten zweiten Widerstand (RB) und einem zwischen den Summierungsschaltungsknoten (SM) und die Referenzspannungsquelle (REF) geschalteten dritten Widerstand (Rt).

5. Leitungsfehlerprüfschaltung nach einem der Anprüche 1 bis 4, deren Beurteilungsschaltung eine Komparatorschaltungsanordnung (K1 - K6) zur Bewertung des Summensignals (Vres) relativ zum Referenzsignal (Vct) und zur Bewertung der Differentialsignale (VtA, BtB) relativ zum Summensignal (Vres) und eine Logikschaltung (OA, OB, OF, OT, A1 - A5, FFI - FFIII) zur Umsetzung der von der Komparatorschaltungsanordnung (K1 - K6) gelieferten Signale in das Fehlerfreisignal bzw. das jeweilige Fehlersignal aufweist.

6. Leitungsfehlerprüfschaltung nach Anpruch 5, deren Komparatorschaltungsanordnung (K1 - K6) eine erste Komparatorschaltung (K1, K2) aufweist, mittels welcher die Summenspannung (Vres) mit der Referenzspannung (Vct) vergleichbar ist.

7. Leitungsfehlerprüfschaltung nach Anspruch 6, deren erste Komparatorschaltung einen ersten Komparator (K1) und einen zweiten Komparator (K2) mit je einem invertierenden Komparatoreingang (-), einem nichtinvertierenden Komparatoreingang (+) und einen Komparatorausgang aufweist, wobei der nichtinvertierende Komparatoreingang (+) des ersten Komparators (K1) und der invertierende Komparatoreingang (-) des zweiten Komparators (K2) mit dem Summierungsschaltungsknoten (SM) und deren jeweils anderer Komparatoreingang mit einem Schaltungsknoten (SK) zwischen dem dritten Widerstand (Rt) und der Referenzspannungsquelle (REF) verbunden ist.

8. Leitungsfehlerprüfschaltung nach Anspruch 7, bei welcher zwischen den invertierenden Komparatoreingang (-) des ersten Komparators (K1) und die Referenzspannungsquelle (REF) eine erste Offsetspannungsquelle (Voffset) und zwischen den nichtinvertierenden Komparatoreingang (+) des zweiten Komparators (K2) und die Referenzspannungsquelle (REF) eine zweite Offsetspannungsquelle (Voffset) geschaltet sind.

9. Leitungsfehlerprüfschaltung nach einem der Ansprüche 5 bis 8, deren Komparatorschaltungsanordnung (K1 - K6) eine zweite Komparatorschaltung (K3 - K6) zum Vergleichen der beiden Differentialsignale (VtA, VtB) mit dem Summensignal (Vres) aufweist.

10. Leitungsfehlerprüfschaltung nach Anspruch 9, deren zweite Komparatorschaltung dritte bis sechste Komparatoren (K3 - K6) mit je einem invertierenden Komparatoreingang (-), einem nichtinvertierenden Komparatoreingang (+) und einen Komparatorausgang aufweist, wobei der nichtinvertierende Komparatoreingang (+) des dritten Komparators (K3) und der invertierende Komparatoreingang (-) des vierten Komparators (K4) mit einem Schaltungsknoten (PA) zwischen dem ersten Differenzierer (CA) und dem ersten Widerstand (RA), der nichtinvertierende Komparatoreingang (+) des fünften Komparators (K5) und der invertierende Komparatoreingang (-) des sechsten Komparators (K6) mit einem Schaltungsknoten (PB) zwischen dem zweiten Differenzierer (CB) und dem zweiten Widerstand (RB) und die je anderen Komparatoreingänge dieser vier Komparatoren (K3 - K6) mit dem Summierungsschaltungsknoten (SM) verbunden sind.

11. Leitungsfehlerprüfschaltung nach einem der Ansprüche 5 bis 10, deren Logikschaltung (OA, OB, OF, OT, A1 - A5, FFI - FFIII) aufweist:

eine die Ausgangssignale von erstem und zweitem Komparator (K1, K2) verknüpfende erste ODER-Schaltung (OF),
eine die Ausgangssignale von drittem und viertem Komparator (K3, K6) verknüpfende zweite ODER-Schaltung (OA),
eine die Ausgangssignale von fünftem und sechsten Komparator (K5, K6) verknüpfende dritte ODER-Schaltung (OB),
eine die Ausgangssignale von zweiter und dritter ODER-Schaltung (OA, OB) verknüpfende vierte ODER-Schaltung (OT),
eine die Ausgangssignale von erster und vierter ODER-Schaltung (OF, OT) verknüpfende erste UND-Schaltung (A1),
eine die Ausgangssignale von zweiter ODER-Schaltung (OA) dritter ODER-Schaltung (OB) und erster UND-Schaltung (A1) verknüpfende zweite UND-Schaltung (A2),
eine die Ausgangssignale von zweiter ODER-Schaltung (OA) und erster UND-Schaltung (A1) verknüpfende dritte UND-Schaltung (A3)
und eine die Ausgangssignale von dritter ODER-Schaltung (OB) und erster UND-Schaltung (A1) verknüpfende vierte UND-Schaltung (A4).

12. Leitungsfehlerprüfschaltung nach Anspruch 11, deren Logikschaltung aufweist:

eine die Ausgangssignale von erster ODER-Schaltung (OF) und vierter ODER-Schaltung (OT) verknüpfende fünfte UND-Schaltung (A5),
drei RS-Flipflops (FFI - FFIII) mit je einem Setzeingang (S), einem Rücksetzeingang (R) und einem Ausgang (QI - QIII),
wobei der Setzeingang (S) des ersten Flipflop (FFI) mit dem Ausgang der vierten UND-Schaltung (A4),
der Setzeingang (S) des zweiten Flipflop (FFII) mit dem Ausgang der zweiten UND-Schaltung (A2),
der Setzeingang (S) des dritten Flipflop (FFIII) mit dem Ausgang der dritten UND-Schaltung (A3),
und die Rücksetzeingänge (R) der drei Flipflops (FFI - FFIII) je mit dem Ausgang der fünften UND- Schaltung (A5) verbunden sind,
und wobei vom Ausgang des ersten Flipflop (FFI) das erste Fehlersignal (FI), vom Ausgang des zweiten Flipflop (FFII) das zweite Fehlersignal (FII) und vom Ausgang des dritten Flipflop (FFIII) das dritte Fehelrsignal (FIII) abnehmbar sind.

13. Leitungsfehlerprüfschaltung nach einem der Ansprüche 10 bis 12, mit einer Bitbewertungsschaltung (AA, AB, FF), aufweisend:

eine die Ausgangssignale von viertem und fünftem Komparator (K4, K5) verknüpfende erste Bewertungs-UND-Schaltung (AA),
eine die Ausgangssignale von drittem und sechstem Komparator (K3, K6) verknüpfende zweite Bewertungs-UND-Schaltung (AB),
und ein Bewertungsflipflop (FF) mit einem Setzeingang (S), der mit einem Ausgang der ersten Bewertungs-UND-Schaltung (AA) verbunden ist, einem Rücksetzeingang (R), der mit einem Ausgang der zweiten Bewertungs-UND-Schaltung (AB) verbunden ist, und einem Bewertungs-Ausgang (Q), von dem decodierte Daten abnehmbar sind.

14. Empfangsschaltung für ein elektrisches Datenübertragungssystem mit einer ersten Leitung (A) und einer zweiten Leitung (B) zur differenzmäßigen Übertragung von binären Datenimpulsen in der Form, daß einem ersten Logikwert ("1") der Datenimpulse ein hohes Potential (5V) auf der ersten Leitung (A) und ein niedriges Potential (0V) auf der zweiten Leitung (B) und einem zweiten Logikwert ("0") der Datenimpulse ein niedriges Potential (0V) auf der ersten Leitung (A) und ein hohes Potential (5V) auf der zweiten Leitung (B) zugeordnet sind, die Empfangsschaltung aufweisend:

eine Leitungsfehlerprüfschaltung nach einem der Ansprüche 1 bis 12;
eine Decodierschaltung (KD, KA, KB) mit einem die Potentiale der beiden Leitungen (A, B) vergleichenden ersten Decodierkomparator (KD), einem das Potential der ersten Leitung (A) mit einem zwischen dem niedrigen Potential (0V) und dem hohen Potential (5V) liegenden Mittenspannung (2,5V) vergleichenden zweiten Decodierkomparator (KA) und einem das Potential der zweiten Leitung (B) mit dem Mittenpotential (2,5V) vergleichenden dritten Decodierkomparator (KB);

und eine Multiplexerschaltung (MUX) mit drei Signaleingängen (ED, EA, EB), von denen ein erster (ED) mit einem Ausgang des ersten Decodierkomparators (KD), ein zweiter (EA) mit einem Ausgang des zweiten Decodierkomparators (KA) und ein dritter (EB) mit einem Ausgang des dritten Decodierkomparators (KB) verbunden ist, mit drei Schaltsignaleingängen (I I, I II, I III) von denen ein erster (I I) mit dem ersten Fehlersignal (FI), ein zweiter (I II) mit dem zweiten Fehlersignal (FII) und ein dritter (I III) mit dem dritten Fehlersignal (FIII) beaufschlagbar ist, und mit einem Datenausgang (DAT), der auf den ersten Signaleingang (ED) geschaltet ist, wenn keines der drei Fehlersignale (FI - FIII) vorliegt, der auf den zweiten Signaleingang (EA) geschaltet ist, wenn am ersten Signaleingang (I I) das erste Fehlersignal (FI) auftritt, und der auf den dritten Signaleingang (EB) geschaltet ist, wenn am zweiten Schaltsignaleingang (I II) das zweite Fehlersignal (FII) oder am dritten Schaltsignaleingang (I III) das dritte Fehlersignal (FIII) auftritt.

15. Empfangsschaltung für ein elektrisches Datenübertragungssystem mit einer ersten Leitung (A) und einer zweiten Leitung (B) zur differenzmäßigen Übertragung von binären Datenimpulsen in der Form, daß einem ersten Logikwert ("1") der Datenimpulse ein hohes Potential (5V) auf der ersten Leitung (A) und ein niedriges Potential (0V) auf der zweiten Leitung (B) und einem zweiten Logikwert ("0") der Datenimpulse ein niedriges Potential (0V) auf der ersten Leitung (A) und ein hohes Potential (5V) auf der zweiten Leitung (B) zugeordnet sind, die Empfangsschaltung aufweisend:

eine Leitungsfehlerprüfschaltung nach Anspruch 13, wobei deren Bitbewertungsschaltung (AA, AB, FF) eine erste Decodiereinrichtung zur Decodierung der über die Leitungen (A, B) übertragenen Daten bildet;

eine zweite Decodiereinrichtung in Form einer das Potential der ersten Leitung (A) mit einem zwischen dem niedrigen Potential (0V) und dem hohen Potential (5V) liegenden Mittenpotential (2,5V) vergleichenden ersten Vergleichseinrichtung (KA);

eine dritte Decodiereinrichtung in Form einer das Potential der zweiten Leitung (B) mit dem Mittenpotential (2,5V) vergleichenden zweiten Vergleichseinrichtung (KB);

eine Multiplexerschaltung (MUX) mit drei Signaleingängen (ED, EA, EB), von denen ein erster (ED) mit dem Bewertungsausgang (Q), ein zweiter (EA) mit einem Ausgang der ersten Vergleichseinrichtung (KA) und ein dritter (EB) mit einem Ausgang der zweiten Vergleichseinrichtung (KB) verbunden sind, mit drei Schaltsignaleingängen (I I, I II, I III), von denen ein erster (I I) mit dem ersten Fehlersignal (FI), ein zweiter (I II) mit dem zweiten Fehlersignal (FII) und ein dritter (I III) mit dem dritten Fehlersignal (FIII) beaufschlagbar ist, und mit einem Datenausgang (DAT), der auf den ersten Signaleingang (ED) geschaltet ist, wenn keines der drei Fehlersignale (FI, FII, FIII) vorliegt, der auf den zweiten Signaleingang (EA) geschaltet ist, wenn am ersten Schaltsignaleingang (I I) das erste Fehlersignal (FI) auftritt, und der auf den dritten Signaleingang (EB) geschaltet ist, wenn am zweiten Schaltsignaleingang (I II) das zweite Fehlersignal (FII) oder am dritten Schaltsignaleingang (I III) das dritte Fehlersignal (FIII) auftritt.

16. Verfahren zur Leitungsfehlerprüfung bei einem elektrischen Datenübertragungssystem mit einer ersten Leitung (A) und einer zweiten Leitung (B) zur differenzmäßigen Übertragung von binären Datenimpulsen in der Form, daß einem ersten Logikwert ("1") der Datenimpulse ein hohes Potential (5V) auf der ersten Leitung (A) und ein niedriges Potential (0V) auf der zweiten Leitung (B) und einem zweiten Logikwert ("0") der Datenimpulse ein niedriges Potential (0V) auf der ersten Leitung (A) und ein hohes Potential (5V) auf der zweiten Leitung (B) zugeordnet sind, mit folgenden Schritten:

a) das Signal auf der ersten Leitung (A) und das Signal auf der zweiten Leitung (B) werden je differenziert;

b) die durch das Differenzieren erhaltenen beiden Differentialsignale (VtA, VtB) und ein Referenzsignal (Vct) werden summiert;

c) ein resultierendes Summensignal (Vres) wird auf seinen Wert im Vergleich zum Referenzsignal (Vct) überprüft;

d) es wird davon ausgegangen, daß kein Leitungsfehler vorliegt, wenn das Summensignal (Vres) gleich dem Referenzsignal (Vct) ist oder in einem vorbestimmten Bereich (Voffset) beidseits des Referenzsignals (Vct) liegt; und

e) es wird davon ausgegangen, daß ein Leitungsfehler vorhanden ist, wenn das Summensignal (Vres) vom Referenzsignal (Vct) abweicht bzw. außerhalb des vorbestimmten Bereichs (Voffset) beidseits des Referenzsignals (Vct) liegt;

f) für den Fall, daß das Summensignal (Vres) nicht gleich dem Referenzsignal (Vct) ist oder nicht innerhalb des vorbestimmten Bereichs (Voffset) beidseits des Referenzsignals (Vct) liegt, werden die beiden Differentialsignale (VtA, VtB) mit dem Summensignal (Vres) verglichen und wird eine Auswertung der Vergleichsergebnisse durchgeführt, wobei

g) ein auf einen Leitungsfehler der zweiten Leitung (B) hinweisendes erstes Fehlersignal (FI) erzeugt wird, wenn das zur ersten Leitung (A) gehörige Differentialsignal (VtA) vom Summensignal (Vres) verschieden ist und das zur zweiten Leitung (B) gehörige Differenzisalsignal (VtB) mit dem Summensignal übereinstimmt;

h) ein auf einen Kurzschluß zwischen den beiden Leitungen (A, B) hinweisendes zweites Fehlersignal (FII) erzeugt wird, wenn beide Differentialsignale (VtA, VtB) größer oder kleiner als das Summensignal (Vres) sind;

i) und ein auf einen Leitungsfehler der ersten Leitung (A) hinweisendes drittes Fehlersignal (FIII) erzeugt wird, wenn das zur ersten Leitung (A) gehörige Differentialsignal (VtA) gleich dem Summensignal (Vres) ist.

17. Verfahren nach Anspruch 16, unter Verwendung der Empfangsschaltung nach Anspruch 15 wobei die Empfangsschaltung Empfangsstellen mit einer die übertragenen Datenimpulse decodierenden Decodiereinrichtung (Q, KA, KB) aufweist, und die zwischen einer Decodierauswertung der Potentiale auf beiden Leitungen (A, B) und einer Decodierauswertung des Potentials nur einer der beiden Leitungen (A oder B) umschaltbar ist, wobei auf die Decodierauswertung der Potentiale beider Leitungen (A, B) geschaltet wird, wenn kein Fehlersignal festgestellt worden ist, wobei auf die Decodierauswertung des Leitungspotentials nur der ersten Leitung (A) umgeschaltet wird, wenn das erste Fehlersignal (FI) festgestellt ist, wobei auf die Potentialauswertung nur der ersten Leitung (A) oder nur der zweiten Leitung (B) umgeschaltet wird, wenn das zweite Fehlersignal (FII) festgestellt wird, und wobei auf eine Potentialauswertung nur der zweiten Leitung (B) umgeschaltet wird, wenn das dritte Fehlersignal (FIII) festgestellt wird.

**Claims**

1. A line error checking circuit for an electric data transmission system having a first line (A) and a second line (B) for differentially transmitting binary data pulses in such a manner that a first logic value ("1") of the data pulses has a high potential (5 V) on the first line (A) and a low potential (0 V) on the second line (B) associated therewith and a second logic value ("0") of the data pulses has a low potential (0 V) on the first line (A) and a high potential (5 V) on the second line (B) associated therewith, said error checking circuit comprising:

   a) a differentiating circuit (CA, CB) by means of which a first differential signal (VtA) can be generated for the first line (A) and a second differential signal (VtB) can be generated for the second line (B), which correspond to a time derivation of the potential curve of the respective line (A, B);

   b) a reference signal source (REF) by means of which a reference signal (Vct) can be provided;

   c) a summing circuit (SM, RA, RB, Rt) by means of which a sum signal (Vres) can be generated representing the sum of the two differential signals (VtA, VtB) and the reference signal (Vct);

   d) an assessment circuit (K1 - K6, OA, OB, OF, OT, A1 - A5, FFI - FFIII) by means of which:

   e) a no-error signal signalling a situation free from line errors is generated if the sum signal (Vres) is equal to the reference signal (Vct) or is within a predetermined range (-Voffset to +Voffset) on both sides of the reference signal;

   f) and, when the no-error signal does not appear,

   g) a first error signal (FI) signalling a line error of the first line (A) is generated if the first differential signal (VtA) is equal to the sum signal (Vres),

   h) a second error signal (FII) signalling a short-circuit between both lines is generated if both differential signals (VtA, VtB) are different from the sum signal (Vres), and

   i) a third error signal (FIII) signalling a line error of the second line (B) is generated if the second differential signal (VtB) is equal to the sum signal (Vres).

2. The line error checking circuit of claim 1, in which the differentiating circuit (CA, CB) thereof comprises a first differentiator in the form of a first capacitor (CA) connected into the first line (A) and a second differentiator in the form of a second capacitor (CB) connected into the second line (B).

3. The line error checking circuit of claim 1 or 2, in which the reference signal source (REF) thereof comprises a reference voltage source.

**4.** The line error checking circuit of claim 3,
in which the summing circuit (SM, RA, RB, Rt) thereof comprises a resistance circuit (RA, RB, Rt) including a summing circuit node, a first resistor (RA) connected between summing circuit node (SM) and first differentiator (CA), a second resistor (RB) connected between summing circuit node (SM) and second differentiator (CB), and a third resistor (Rt) connected between summing circuit node (SM) and reference voltage source (REF).

**5.** The line error checking circuit of any of claims 1 to 4,
in which the assessment circuit thereof comprises a comparator circuit arrangement (K1 - K6) for assessing the sum signal (Vres) in relation to the reference signal (Vct) and for assessing the differential signals (VtA, BtB) in relation to the sum signal (Vres), and a logic circuit (OA, OB, OF, OT, A1 - A5, FFI - FFIII) for converting the signals delivered by the comparator circuit arrangement (K1 - K6) to the no-error signal and the respective error signal, respectively.

**6.** The line error checking circuit of claim 5,
in which the comparator circuit arrangement (K1 - K6) thereof comprises a first comparator circuit (K1, K2) by means of which the sum voltage (Vres) can be compared with the reference voltage (Vct).

**7.** The line error checking circuit of claim 6,
in which the first comparator circuit thereof comprises a first comparator (K1) and a second comparator (K2) each having an inverting comparator input (-), a non-inverting comparator input (+) and a comparator output, the non-inverting comparator input (+) of first comparator (K1) and the inverting comparator input (-) of second comparator (K2) being connected to the summing circuit node (SM) and the respective other comparator input being connected to a circuit node (SK) between third resistor (Rt) and reference voltage source (REF).

**8.** The line error checking circuit of claim 7,
in which a first offset voltage source (Voffset) is connected between the inverting comparator input (-) of first comparator (K1) and the reference voltage source (REF), and a second offset voltage source (Voffset) is connected between the non-inverting comparator input (+) of second comparator (K2) and the reference voltage source (REF).

**9.** The line error checking circuit of any of claims 5 to 8,
in which the comparator circuit arrangement (K1 - K6) thereof comprises a second comparator circuit (K3 - K6) for comparing the two differential signals (VtA, VtB) to the sum signal (Vres).

**10.** The line error checking circuit of claim 9,
in which the second comparator circuit thereof comprises third to sixth comparators (K3 - K6) each having an inverting comparator input (-), a non-inverting comparator input (+) and a comparator output, the non-inverting comparator input (+) of third comparator (K3) and the inverting comparator input (-) of fourth comparator (K4) being connected to a circuit node (PA) between first differentiator (CA) and first resistor (RA), the non-inverting comparator input (+) of fifth comparator (K5) and the inverting comparator input (-) of sixth comparator (K6) being connected to a circuit node (PB) between second differentiator (CB) and second resistor (RB) and the respective other comparator inputs of these four comparators (K3 - K6) being connected to summing circuit node (SM).

**11.** The line error checking circuit of any of claims 5 to 10,
in which the logic circuit (OA, OB, OF, OT, A1 - A5, FFI - FFIII) thereof comprises:

   a first OR circuit (OF) linking the output signals of first and second comparators (K1, K2),
   a second OR circuit (OA) linking the output signals of third and fourth comparator (K3, K6),
   a third OR circuit (OB) linking the output signals of fifth and sixth comparators (K5, K6),
   a fourth OR circuit (OT) linking the output signals of second and third OR circuit (OA, OB),
   a first AND circuit (A1) linking the output signal of first and fourth OR circuits (OF, OT),
   a second AND circuit (A2) linking the output signals of second OR circuit (OA), third OR circuit (OB) and first AND circuit (A1),
   a third AND circuit (A3) linking the output signals of second OR circuit (OA) and first AND circuit (A1),
   and a fourth AND circuit (A4) linking the output signals of third OR circuit (OB) and first AND circuit (A1).

**12.** The line error checking circuit of claim 11,
in which the logic circuit thereof comprises:

a fifth AND circuit (A5) linking the output signals of first OR circuit (OF) and fourth OR circuit (OT),
three RS flipflops (FFI - FFIII) each having a setting input (S), a resetting input (R) and an output (QI - QIII),
the setting input (S) of first flipflop (FFI) being connected to the output of fourth AND circuit (A4),
the setting input (S) of second flipflop (FFII) being connected to the output of second AND circuit (A2),
the setting input (S) of third flipflop (FFIII) being connected to the output of third AND circuit (A3),
and the resetting inputs (R) of the three flipflops (FFI - FFIII) being each connected to the output of fifth AND circuit (A5),
with the first error signal (FI) being available at the output of first flipflop (FFI), the second error signal (FII) being available at the output of second flipflop (FFII), and the third error signal (FIII) being available at the output of third flipflop (FFIII).

13. The line error checking circuit of any of claims 10 to 12,
   comprising a bit assessment circuit (AA, AB, FF) including:

   a first assessment AND circuit (AA) linking the output signals of fourth and fifth comparators (K4, K5),
   a second assessment AND circuit (AB) linking the output signals of third and sixth comparators (K3, K6),
   and an assessment flipflop (FF) having a setting input (S) connected to an output of the first assessment AND circuit (AA), a resetting input (R) connected to an output of the second assessment AND circuit (AB), and an assessment output (Q) from which decoded data are available.

14. A receiving circuit for an electric data transmission system having a first line (A) and a second line (B) for differentially transmitting binary data pulses in such a manner that a first logic value ("1") of the data pulses has a high potential (5 V) on the first line (A) and a low potential (0 V) on the second line (B) associated therewith and a second logic value ("0") of the data pulses has a low potential (0 V) on the first line (A) and a high potential (5 V) on the second line (B) associated therewith, said receiving circuit comprising:

   a line error checking circuit according to any of claims 1 to 12;
   a decoding circuit (KD, KA, KB) having a first decoding comparator (KD) comparing the potentials of the two lines (A, B), a second decoding comparator (KA) comparing the potential of the first line (A) to a mean, voltage (2.5 V) between the low potential (0 V) and high potential (5 V), and a third decoding comparator (KB) comparing the potential of the second line (B) to the mean potential (2.5 V);
   and a multiplexer circuit (MUX) having three signal inputs (ED, EA, EB), of which a first one (ED) is connected to an output of first decoding comparator (KD), a second one (EA) is connected to an output of second decoding comparator (KA) and a third one (EB) is connected to an output of third decoding comparator (KB), and having three switching signal inputs (I I, I II, I III) of which a first one (I I) is adapted to have the first error signal (FI) applied thereto, a second one (I II) is adapted to have the second error signal (FII) applied thereto and a third one (I III) is adapted to have the third error signal (FIII) applied thereto, and having a data output (DAT) connected to the first signal input (ED) if none of the three error signals (FI - FIII) is present, connected to the second signal input (EA) if the first error signal (FI) appears at first signal input (I I), and connected to the third signal input (EB) if the second error signal (FII) appears at second switching signal input (I II) or the third error signal (FIII) appears at third switching signal input (I III).

15. A receiving circuit for an electric data transmission system having a first line (A) and a second line (B) for differentially transmitting binary data pulses in such a manner that a first logic value ("1") of the data pulses has a high potential (5 V) on the first line (A) and a low potential (0 V) on the second line (B) associated therewith and a second logic value ("0") of the data pulses has a low potential (0 V) on the first line (A) and a high potential (5 V) on the second line (B) associated therewith, said receiving circuit comprising:

   a line error checking circuit according to claim 13, with the bit assessment circuit (AA, AN, FF) thereof constituting a first decoding means for decoding the data transmitted via the lines (A, B);
   a second decoding means in the form of a first comparison means (KA) comparing the potential of the first line (A) with a mean potential (2.5 V) between the potential (0 V) and high potential (5 V);
   a third decoding means in the form of a second comparison means (KB) comparing the potential of the second line (B) with the mean potential (2.5 V);
   a multiplexer circuit (MUX) having three signal inputs (ED, EA, EB), of which a first one (ED) is connected to the assessment output (Q), a second one (EA) is connected to an output of the first comparison means (KA) and a third one (EB) is connected to an output of the second comparison means (KB), and having three switching signal inputs (I I, I II, I III) of which a first one (I I) is adapted to have the first error signal (FI) applied thereto, a second one (I II) is adapted to have the second error signal (FII) applied thereto and a third one (I III) is adapted to have the third error signal (FIII) applied thereto, and having a data output (DAT) connected to the first signal input (ED) if none of the three error signals (FI - FIII) is present, connected to the second signal input (EA) if the first error signal (FI) appears at first signal input (I I), and connected to the third signal input (EB) if the second error signal (FII) appears at second switching signal input (I II) or the third error signal (FIII) appears at third switching signal input (I III).

16. A method for line error checking in an electric data transmission system having a first line (A) and a second line (B) for differentially transmitting binary data pulses in such a manner that a first logic value ("1") of the data pulses has a high potential (5 V) on the first line (A) and a low potential (0 V) on the second line (B) associated therewith and a second logic value ("0") of the data pulses has a low potential (0 V) on the first line (A) and a high potential (5 V) on the second line (B) associated therewith,
said method comprising the following steps:

a) the signal on the first line (A) and the signal on the second line (B) are differentiated each;
b) the two differential signals (VtA, VtB) obtained by differentiating and a reference signal (Vct) are summed up;
c) a resulting sum signal (Vres) is examined with respect to its value in comparison with the reference signal (Vct);
d) it is assumed that no line error is present if the sum signal (Vres) is equal to the reference signal (Vct) or is within a predetermined range (Voffset) on both sides of the reference signal (Vct); and
e) it is assumed that a line error is present if the sum signal (Vres) differs from the reference signal (Vct) or is outside the predetermined range (Voffset) on both sides of the reference signal (Vct);
f) in the event that the sum signal (Vres) is not equal to the reference signal (Vct) or is not within the predetermined range (Voffset) on both sides of the reference signal (Vct), the two differential signals (VtA, VtB) are compared with the sum signal (Vres) and an evaluation of the comparison results is carried out, in which
g) a first error signal (FI) indicating a line error of the second line (B) is generated if the differential signal (VtA) belonging to the first line (A) is different from the sum signal (Vres) and the differential signal (VtB) belonging to the second line (B) is identical with the sum signal;
h) a second error signal (FII) indicating a short-circuit between the two lines (A, B) is generated if both differential signals (VtA, VtB) are greater or smaller than the sum signal (Vres);
i) and a third error signal (FIII) indicating a line error of the first line (A) is generated if the differential signal (VtA) belonging to the first line (A) is equal to the sum signal (Vres).

17. The method of claim 16, making use of the receiving circuit according to claim 15, said receiving circuit comprising receiving locations with a decoding means (Q, KA, KB) decoding the data pulses transmitted and being adapted to be switched over between decoding evaluation of the potentials on both lines (A, B) and decoding evaluation of the potential of only one of the two lines (A or B),
wherein switching to decoding evaluation of the potentials of both lines (A, B) is effected if no error signal has been detected, switching to decoding evaluation of the line potential of only the first line (A) is effected if the first error signal (FI) is detected, switching to potential evaluation of only the first line (A) or only the second line (B) is effected if the second error signal (FII) is detected, and switching to potential evaluation of only the second line (B) is effected if the third error signal (FIII) is detected.

## Revendications

1. Circuit de détecteur de défauts de lignes pour un système de transmission de données électriques comprenant une première ligne (A) et une seconde ligne (B) pour la transmission différentielle d'impulsions de données binaires en ce sens qu'à une première valeur logique ("1") des données d'impulsion sont attribués un potentiel (5V) haut sur la première ligne et un potentiel (0V) bas sur la seconde ligne (B) et à une seconde valeur logique ("0") des données d'impulsion sont attribués un potentiel (0V) bas sur la première ligne (A) et un potentiel (5V) haut sur la seconde ligne (B),
le circuit détecteur de défauts présentant les éléments suivants :

a) un circuit différentiateur (CA, CB), au moyen duquel un premier signal différentiel (VtA) et un second signal différentiel (VtB) peuvent être générés respectivement pour la première ligne (A) et pour la seconde ligne (B), lesquels signaux correspondent à une dérivée dans le temps de la courbe de potentiel de la ligne respective (A, B) ;
b) une source de signal de référence (REF), au moyen de laquelle un signal de référence (VcT) peut être mis à disposition ;

c) un circuit totalisateur (SM, RA, RB, Rt), au moyen duquel on peut générer un signal composite (Vres) représentant le total résultant des deux signaux différentiels (VtA, VtB) et du signal de référence (VcT) ;

d) un circuit d'évaluation (K1 - K6, OA, OB, OF, OT, A1 - A5, FFI - FFII), au moyen duquel :

e) un signal d'absence de défaut signalant l'absence de défaut de ligne est généré lorsque le signal composite (Vres) est égal au signal de référence (Vct) ou se situe dans les limites d'une plage prédéfinie (-Voffset) jusqu'à (+Voffset) des deux côtés du signal de référence ;

f) et dans le cas où le signal d'absence de défaut n'apparaît pas,

g) un premier signal de défaut (FI) signalant un défaut de ligne de la première ligne (A) est généré lorsque le premier signal différentiel (VtA) est égal au signal composite (Vres),

h) un second signal de défaut (FII) signalant un court-circuit entre les deux lignes est généré lorsque les deux signaux différentiels (VtA, VtB) sont différents du signal composite (Vres), et

i) un troisième signal de défaut (FIII) signalant un défaut de ligne de la seconde ligne (B) est généré lorsque le second signal différentiel (VtB) est égal au signal composite (Vres).

2. Circuit détecteur de défauts de lignes selon la revendication 1, dont le circuit différentiateur (CA, CB) présente un premier différentiateur sous la forme d'un premier condensateur (CA) branché sur la première ligne (A) et un second différentiateur sous la forme d'un second condensateur (CB) branché sur la seconde ligne (B).

3. Circuit détecteur de défauts de lignes selon la revendication 1 ou 2, dont la source de signal de référence (REF) présente une source de tension de référence.

4. Circuit détecteur de défauts de lignes selon la revendication 3, dont le circuit totalisateur (SM, RA, RB, Rt) présente un circuit de résistance (RA, RB, Rt) avec un noeud de commutation de totalisation (SM), une première résistance (RA) branchée entre les noeuds de commutation de totalisation (SM) et le premier différentiateur (CA), une seconde résistance (RB) branchée entre le noeud de commutation de totalisation (SM) et le second différentiateur (CB) et une troisième résistance (Rt) branchée entre le noeud de circuit de totalisation (SM) et la source de tension de référence (REF).

5. Circuit détecteur de défauts de lignes selon l'une quelconque des revendications 1 à 4, dont le circuit d'évaluation présente un agencement de circuit comparateur (K1 - K6) pour l'évaluation du signal composite (Vres) par rapport au signal de référence (Vct) et pour l'évaluation des signaux différentiels (VtA, BtB) par rapport au signal composite (Vres) et un circuit logique (OA, OB, OF, OT, A1 - A5, FFI - FIII) pour la conversion des signaux fournis par l'agencement de circuit comparateur (K1 - K6) dans le signal sans défaut ou le signal de défaut concerné.

6. Circuit détecteur de défauts de lignes selon la revendication 5, dont l'agencement de circuit comparateur (K1 - K6) présente un premier circuit comparateur (K1, K2) au moyen duquel la tension cumulée (Vres) peut être comparée avec la tension de référence (Vct).

7. Circuit détecteur de défauts de lignes selon la revendication 6, dont le premier circuit comparateur présente un premier comparateur (K1) et un second comparateur (K2) avec respectivement une entrée (-) inverseuse, une entrée (+) non inverseuse et une sortie, l'entrée (+) non inverseuse du premier comparateur (K1) et l'entrée (-) inverseuse du second comparateur (K2) étant reliées au noeud du circuit de totalisation (SM) et dont l'autre entrée respective est reliée à un noeud de circuit (SK) entre la troisième référence de résistance (Rt) et la source de tension de référence (REF).

8. Circuit détecteur de défauts de lignes selon la revendication 7, sur lequel entre l'entrée (-) inverseuse du premier comparateur (K1) et la source de tension de référence (REF) sont branchées une première source de tension de décalage (Voffset) et entre l'entrée (+) non inverseuse du second comparateur (K2) et la source de tension de référence (REF) une seconde source de tension de décalage (Voffset).

9. Circuit détecteur de défauts de lignes selon l'une quelconque des revendications 5 à 8, dont l'agencement de circuit comparateur (K1 - K6) présente un second circuit comparateur (K3 - K6) pour la comparaison des deux signaux différentiels (VtA, VtB) avec le signal composite (Vres).

10. Dispositif détecteur de défauts de lignes selon la revendication 9, dont le circuit comparateur présente des troisièmes jusqu'à des sixièmes comparateurs (K3 - K6) comprenant chacun une entrée (-) inverseuse, une entrée (+) non inverseuse et une sortie, l'entrée (+) non inverseuse du troisième comparateur (K3) et l'entrée (-) inverseuse du quatrième comparateur (K4) étant reliées à un noeud de circuit (PA) entre le premier différentiateur (CA) et la première résistance (RA), l'entrée (+) non inverseuse du cinquième comparateur (K5) et l'entrée (-) inverseuse du sixième comparateur (K6) étant reliées à un noeud de circuit (PB) entre le second différentiateur (CB) et la seconde résistance (RB) et les autres entrées de ces quatre comparateurs (K3 - K6) étant reliées au noeud de circuit de totalisation (SM).

**11.** Circuit détecteur de défauts de lignes selon l'une quelconque des revendications 5 à 10, dont le circuit logique (OA, OB, OF, OT, A1 - A5, FFI - FFIII) présente les éléments suivants:

un premier circuit OU (OF) associant les signaux de sortie du premier et du second comparateurs (K1 - K2),
un second circuit OU (OA) associant les signaux de sortie du troisième et du quatrième comparateurs (K3, K6),
un troisième circuit OU (OB) associant les signaux de sortie du cinquième et du sixième comparateurs (K5 - K6),
un quatrième circuit OU (OT) associant les signaux de sortie du second et du troisième circuits OU (OA, OB),
un premier circuit ET (A1) associant les signaux de sortie du premier et du quatrième circuits OU (OF, OT),
un second circuit ET (A2) associant les signaux de sortie du second circuit OU (OA), du troisième circuit OU (OB) et du premier circuit ET (A1),
un troisième circuit ET (A3) associant les signaux de sortie du second circuit OU (OA) et du premier circuit ET (A1) et un quatrième circuit ET (A4) associant les signaux de sortie du troisième circuit OU (OB) et du premier circuit ET (A1).

**12.** Circuit détecteur de défauts de lignes selon la revendication 11, dont le circuit logique présente les éléments suivants :

un cinquième circuit ET (A5) associant les signaux de sortie du premier circuit OU (OF) et du quatrième circuit OU (OT),
trois bascules RS (FFI - FFIII) étant reliées chacune à une entrée d'initialisation (S), une entrée de réinitialisation (R) et une sortie (QI - QIII),
l'entrée d'initialisation (S) de la première bascule (FFI) étant reliée à la sortie du quatrième circuit ET (A4),
l'entrée d'initialisation (S) de la seconde bascule (FFII) étant reliée à la sortie du second circuit ET (A2),
l'entrée d'initialisation (S) de la troisième bascule (FFIII) étant reliée à la sortie du troisième circuit ET (A3),
et les entrées de réinitialisation (R) des trois bascules (FFI - FFIII) étant reliées chacune à la sortie du cinquième circuit ET (A5),
et le premier signal de défaut (FI), le second signal de défaut (FII) et le troisième signal de défaut (FIII) pouvant être prélevés respectivement sur la sortie de la première bascule (FI), sur la sortie de la deuxième bascule (FFII) et sur la sortie de la troisième bascule (FFIII).

**13.** Circuit détecteur de défauts de lignes selon l'une quelconque des revendications 10 à 12, avec un circuit d'évaluation de bit (AA, AB, FF) présentant les éléments suivants :

un premier circuit ET d'évaluation (AA) associant les signaux de sortie du quatrième et du cinquième comparateurs (K4, K5),
un second circuit ET d'évaluation (AB) associant les signaux de sortie du troisième et du sixième comparateurs (K3, K6),
et une bascule d'évaluation (FF) avec une entrée d'initialisation (S), qui est reliée à une sortie du premier circuit ET d'évaluation (AA), une entrée de réinitialisation (R), qui est reliée à une sortie du second circuit ET d'évaluation (AB) et une sortie d'évaluation (Q), sur lequel des données décodées peuvent être prélevées.

**14.** Circuit de réception pour un système de transmission de données électriques comprenant une première ligne (A) et une seconde ligne (B) pour la transmission par différence d'impulsions de données binaires en ce sens qu'à une première valeur logique ("1") des impulsions de données est attribué un potentiel (SV) haut sur la première ligne (A) et un potentiel (0V) bas sur la seconde ligne (B) et à une seconde valeur logique ("0") des impulsions de données sont attribués un potentiel (0V) bas sur la première ligne (A) et un potentiel (5V) haut sur la seconde ligne (B), le circuit de réception présentant les éléments suivants :

un circuit de détecteur de défauts de lignes selon l'une quelconque des revendications 1à 12 ;
un circuit de décodage (KD, KA, KB) avec un premier comparateur de décodage (KD) comparant les potentiels des deux lignes (A, B), un second comparateur de décodage (KA) comparant le potentiel de la première ligne (A) avec une tension moyenne (2,5V) située entre le potentiel bas (0V) et le potentiel haut (5V) et un troisième comparateur de décodage (KB) comparant le potentiel de la seconde ligne (B) avec le potentiel moyen (2,5V) ;

et un circuit multiplexeur (MUX) avec trois entrées de signal (ED, EA, EB), dont une première entrée (ED) est reliée à une sortie du premier comparateur de décodage (KD), une seconde entrée (EA) à une sortie du deuxième comparateur de décodage (KA) et une troisième entrée (EB) à une sortie du troisième comparateur de décodage (KB), avec trois entrées de signal de commutation (I I, I II, I III) dont une première entrée (I I) peut être alimentée avec le premier signal de défaut (FI), une seconde entrée (I II) avec le second signal de défaut (FII) et une troisième entrée (I III) avec le troisième signal de défaut (FIII), et avec une sortie de données (DAT), qui est commutée sur la première entrée de signal (ED), lorsqu'aucun des trois signaux de défaut (FI - FIII) n'est présent, qui est commutée sur la seconde entrée de signal (EA) lorsque le premier signal de défaut (FI) apparaît sur la première entrée de signal (I I), et qui est commutée sur la troisième entrée de signal (EB) lorsque le second signal de défaut (FII) apparaît sur la seconde entrée de signal de commutation (I II) ou le troisième signal de défaut (FIII) apparaît sur la troisième entrée de signal de commutation (I III).

15. Circuit de réception pour un système de transmission de données électriques comprenant une première ligne (A) et une seconde ligne (B) pour la transmission par différence d'impulsions de données binaires en ce sens qu'à une première valeur logique ("1") des impulsions de données est attribué un potentiel haut (5V) sur la première ligne (A) et un potentiel bas (0V) sur la seconde ligne (B) et à une seconde valeur logique ("0") des impulsions de données sont attribués un potentiel bas (0V) sur la première ligne (A) et un potentiel haut (5V) sur la seconde ligne (B), le circuit de réception présentant les éléments suivants :

un circuit détecteur de défauts de lignes selon la revendication 13, dont le circuit d'évaluation de bit (AA, AB, FF) forme un premier dispositif de décodage pour le décodage des données transmises par les lignes (A, B);
un second dispositif de décodage sous la forme d'un premier dispositif de comparaison (KA) comparant le potentiel de la première ligne (A) avec un potentiel moyen (2,5V) situé entre le potentiel bas (0V) et le potentiel haut (5V) ;
un troisième dispositif de décodage sous la forme d'un second dispositif de comparaison (KB) comparant le potentiel de la seconde ligne (B) avec le potentiel moyen (2,5V);
un circuit multiplexeur (MUX) avec trois entrées de signal (ED, EA, EB), dont une première entrée (ED) est reliée à la sortie d'évaluation (Q), une deuxième entrée (EA) à une sortie du premier dispositif de comparaison (KA) et une troisième entrée (EB) à une sortie du second dispositif de comparaison (KB), avec trois entrées de signal de commutation (I I, I II, I III), dont une première entrée (I I) peut être alimentée avec le premier signal de défaut (FI), une seconde entrée (I II) avec le second signal de défaut (FII) et une troisième entrée (I III) avec le troisième signal de défaut (FIII), et avec une sortie de données (DAT), qui est commutée sur la première entrée de signal (EB) lorsqu'on n'a aucun des trois signaux de défaut (FI, FII, FIII), qui est commuté sur la seconde entrée de signal (EA) lorsque le premier signal de défaut (FI) àpparait sur la première entrée de signal de commutation (I I), et qui est commutée sur la troisième entrée de signal (EB) lorsque le second signal de défaut (F II) apparaît sur la seconde entrée de signal de commutation (I II) ou bien le troisième signal de défaut (FIII) apparaît sur la troisième entrée de signal de commutation (I III).

16. Procédé de détection de défauts de lignes pour un système de transmission de données électrique comprenant une première ligne (A) et une seconde ligne (B) pour la transmission par différence d'impulsions de données binaires en ce sens qu'à une première valeur logique ("1") des impulsions de données sont attribués un potentiel haut (5V) sur la première ligne (A) et un potentiel bas (0V) sur la seconde ligne (B) et à une seconde valeur logique ("0") des impulsions de données sont attribués un potentiel bas (0V) sur la première ligne (A) et un potentiel haut (5V) sur la seconde ligne (B),
comprenant les étapes suivantes :

a) le signal sur la première ligne (A) et le signal sur la seconde ligne (B) sont respectivement différenciés ;
b) les deux signaux différentiels (VtA, VtB) obtenus par la différenciation et un signal de référence (Vet) sont totalisés ;
c) un signal composite (Vres) résultant est vérifié au niveau de sa valeur par rapport au signal de référence (Vct) ;
d) on suppose qu'on n'a aucun défaut de ligné lorsque le signal composite (Vres) est identique au signal de référence (Vct) ou se situe dans une plage prédéfinie (Voffset) des deux côtés du signal de référence (Vct) ; et
e) on suppose qu'on a un défaut de ligne lorsque le signal composite (Vres) est différent du signal de référence (Vct) ou est situé à l'extérieur de la plage prédéfinie (Voffset) des deux côtés du signal de référence (Vct) ;
f) dans le cas où le signal composite (Vres) n'est pas identique au signal de référence ou n'est pas disposé à l'intérieur de la plage prédéfinie (Voffset) des deux côtés du signal de référence (Vct), les deux signaux différentiels (VtA, VtB) sont comparés avec le signal composite (Vres) et on effectue une analyse des résultats de la comparaison,

g) un premier signal de défaut (FI) indiquant un défaut de ligne de la seconde ligne (B) étant généré lorsque le signal différentiel (VtA) appartenant à la première ligne (A) est différent du signal composite (Vres) et le signal différentiel (VtB) appartenant à la seconde ligné (B) coîncide avec ce signal composite ;

h) un second signal de défaut (FII) indiquant un court-circuit entre les deux lignes (A, B) est généré lorsque les deux signaux différentiels (VtA, VtB) sont supérieurs ou inférieurs au signal composite (Vres) ;

i) et un troisième signal de défaut (FIII) indiquant un défaut de ligne de la première ligne (A) est généré lorsque le signal différentiel (VtA) appartenant à la première ligne est identique au signal composite (Vres).

17. Procédé selon la revendication 16, avec l'utilisation du circuit de réception selon la revendication 15, le circuit de réception présentant des points de réception avec un dispositif de décodage (Q, KA, KB) décodant les impulsions de données transmises, et qui peut être commuté entre une analyse de décodage des potentiels sur les deux lignes (A, B) et une analyse de décodage du potentiel de seulement l'une des deux lignes (A ou B), la commutation sur l'analyse de décodage des potentiels des deux lignes (A, B) étant effectuée lorsqu'on n'a constaté aucun signal de défaut, sachant qu'on commute sur l'analyse de décodage de potentiel de ligne de seulement la première ligne (A) lorsque le premier signal de défaut (FI) est constaté, la commutation sur l'analyse de potentiel de seulement la première ligne (A) ou de seulement la seconde ligne (B) étant effectuée lorsque le second signal de défaut (FII) est constaté, la commutation sur une analyse de potentiel de seulement la seconde ligne (B) étant effectuée lorsque le troisième signal de défaut (FIII) est constaté.

FIG.1

FIG.3

FIG.2

EP 0 999 675 B1

FIG. 4

**101** Vres > Vct + Voffset ?
— JA →
— NEIN ↓

**102** Vres < Vct - Voffset ?
— JA →
— NEIN ↓

**105** VtA - Vres < 0
— JA ↓
— NEIN →

**103** VtA - Vres > 0
— JA ↓
— NEIN →

**106** VtB - Vres < 0
— NEIN →
— JA ↓

**104** VtB - Vres > 0
— NEIN →
— JA ↓

| B KURZSCHLUSS ODER OFFEN | A MIT B KURZGE- SCHLOSSEN | A KURZSCHLUSS ODER OFFEN | B KURZSCHLUSS ODER OFFEN | A MIT B KURZGE- SCHLOSSEN | A KURZSCHLUSS ODER OFFEN |
| N I | N II | N III | P I | P II | P III |

KEINE FEHLER FESTSTELLUNG

EP 0 999 675 B1

FIG.5

EP 0 999 675 B1

TABELLE

| K1 | K2 | K3 | K4 | K5 | K6 | OA | OB | OT | OF | A1 | A2 | A3 | A4 | A5 | QI | QII | QIII | Fehler | Zustand Nr. | Zustandsart | |
|---|---|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 | 0 | nein | 1 | Ruhe (keine Flanken) | |
| 0 | 0 | 0 | 1 | 1 | 0 | 1 | 1 | 1 | 0 | 0 | 0 | 0 | 0 | 1 | 0 | 0 | 0 | nein | 2 | Flanken | Übergang von dominant > rezessiv |
| 0 | 0 | 1 | 0 | 0 | 1 | 1 | 1 | 1 | 0 | 0 | 0 | 0 | 0 | 1 | 0 | 0 | 0 | nein | 3 | Flanken | Übergang von rezessiv < dominant |
| 1 | 0 | 1 | 0 | 0 | 0 | 1 | 0 | 1 | 1 | 1 | 0 | 0 | 1 | 0 | 1 | 0 | 0 | PI | 4 | pos. Flanke nur auf A | B kurzgeschlossen oder offen |
| 1 | 0 | 1 | 0 | 1 | 0 | 1 | 1 | 1 | 1 | 1 | 1 | 0 | 0 | 0 | 0 | 1 | 0 | PII | 5 | pos. Flanke auf A und B | A mit B kurzgeschlossen |
| 1 | 0 | 0 | 0 | 1 | 0 | 0 | 1 | 1 | 1 | 1 | 0 | 1 | 0 | 0 | 0 | 0 | 1 | PIII | 6 | pos. Flanke nur auf B | A kurzgeschlossen oder offen |
| 0 | 1 | 0 | 1 | 0 | 0 | 1 | 0 | 1 | 1 | 1 | 0 | 0 | 1 | 0 | 1 | 0 | 0 | NI | 7 | neg. Flanke nur auf A | B kurzgeschlossen oder offen |
| 0 | 1 | 0 | 1 | 0 | 1 | 1 | 1 | 1 | 1 | 1 | 1 | 0 | 0 | 0 | 0 | 1 | 0 | NII | 8 | neg. Flanke auf A und B | A mit B kurzgeschlossen |
| 0 | 1 | 0 | 0 | 0 | 1 | 0 | 1 | 1 | 1 | 1 | 0 | 1 | 0 | 0 | 0 | 0 | 1 | NIII | 9 | neg. Flanke nur auf B | A kurzgeschlossen oder offen |

FIG. 6

EP 0 999 675 B1

# FIG.7

Vres

+Voffset

Vct

-Voffset

K1=1
K2=0

K1=K2=0

K2=1

K1=0

FIG.8